# EUROPEAN PATENT APPLICATION

(11) **EP 4 667 537 A1**
(43) Date of publication of application: **24.12.2025**
(21) Application number: 25182799.4
(22) Date of filing: 13.06.2025
(51) Int. Cl.: C09D 5/00, C09D 4/06, B05D 1/36, C08F 257/00, C08J 7/043

(54) **PRIMER COMPOSITION, LAMINATE, AND METHOD FOR PRODUCING LAMINATE**

(30) Priority: 18.06.2024 JP 2024097861
(71) Applicant: TOKYO OHKA KOGYO CO., LTD., Kawasaki-shi, Kanagawa 211 0012 (JP)
(72) Inventor: SENZAKI, Takahiro, KANAGAWA, 211-0012 (JP); MORI, Risako, KAWASAKI-SHI, 211-0012 (JP)
(74) Representative: Plasseraud IP

(57) **Abstract**

Provided is a primer composition capable of improving adhesion between a substrate and a cured product layer formed of a cured product of a photosensitive composition regardless of a type of the substrate, a laminate including a primer layer derived from the primer composition, and a method for producing the laminate. The primer composition contains a base material component (A), a compound (B), and a solvent (S), the base material component (A) contains a resin (A1) and/or a polymerizable compound (A2), the polymerizable compound (A2) is a compound polymerizable by a polymerization mechanism other than radical polymerization, and the compound (B) has a functional group capable of forming a covalent bond by a reaction with an ethylenic unsaturated double bond-containing group in a photocurable compound (a) in a photosensitive composition.

## Description

This application is based on and claims the benefit of priority from Japanese Patent Application No. 2024-097861, filed on 18 June 2024, the content of which is incorporated herein by reference.

### BACKGROUND OF THE INVENTION

### Field of the Invention

The present invention relates to a primer composition, a laminate, and a method for producing a laminate.

### Related Art

Negative photosensitive compositions that can be cured by exposure are widely used in production of functional layers such as insulating layers in various semiconductor elements and in production of insulating layers and various optical functional layers in image display panels such as liquid crystal display panels and organic EL display panels.

As such a photosensitive composition, for example, a photosensitive composition containing an acrylic resin, a silane coupling agent having a specific structure, and a polymerizable compound has been proposed (refer to Patent Document 1).

Patent Document 1: PCT International Publication No. WO2015/194639

### SUMMARY OF THE INVENTION

A photosensitive composition in the related art has a problem in that adhesion to a substrate is not sufficient and peeling may occur. On the other hand, as disclosed in Patent Document 1, there is a case where a silane coupling agent is used to improve adhesion. However, there are problems that Patent Document 1 can be applied only to a substrate having a silanol group on a surface thereof, and a substrate having a silanol group on the surface thereof may not provide a sufficient effect depending on the amount of the silanol group.

The present invention has been made in view of the above circumstances, and an object thereof is to provide a primer composition capable of improving adhesion between a substrate and a cured product layer formed of a cured product of a photosensitive composition regardless of a type of the substrate, a laminate including a primer layer derived from the primer composition, and a method for producing the laminate.

As a result of intensive studies to solve the above problems, the present inventors have found that the above problems can be solved by a primer composition containing a predetermined base material component (A), a predetermined compound (B), and a solvent (S), and have completed the present invention. Specifically, the present invention provides the following.

A first aspect is a primer composition used in forming a primer layer between a substrate and a cured product layer comprising a cured product of a photosensitive composition, when forming the cured product layer above the substrate, the photosensitive composition containing a photocurable compound (a) having an ethylenic unsaturated double bond-containing group, and a photopolymerization initiating agent (b),
the primer composition containing a base material component (A), a compound (B), and a solvent (S),
the base material component (A) being a compound not forming a covalent bond by a reaction with the ethylenic unsaturated double bond-containing group in the photocurable compound (a), the base material component (A) containing a resin (A1) and/or a polymerizable compound (A2),
the polymerizable compound (A2) being a compound polymerizable by a polymerization mechanism other than radical polymerization,
the compound (B) having a functional group capable of forming a covalent bond by a reaction with the ethylenic unsaturated double bond-containing group in the photocurable compound (a), the functional group in the compound (B) being at least one selected from the group consisting of an ethylenic unsaturated double bond-containing group, an amino group, a hydrosilyl group, and a thiol group.

A second aspect is a laminate including: a substrate; the primer layer derived from the primer composition as described in the first aspect; and the cured product layer.

A third aspect is a method for producing the laminate as described in the second aspect, the method including: applying the primer composition as described in the first aspect onto a substrate and drying the primer composition to form a primer layer;
applying the photosensitive composition onto the substrate having the primer layer formed thereon to form a photosensitive composition layer; and
exposing the photosensitive composition layer to form the cured product layer,
when a component other than the compound (B) in the primer composition is polymerizable or crosslinkable, the component other than the compound (B) in the primer composition being polymerized or crosslinked before application of the photosensitive composition.

According to the present invention, it is possible to provide a primer composition capable of improving adhesion between a substrate and a cured product layer formed of a cured product of a photosensitive composition regardless of a type of the substrate, a laminate including a primer layer derived from the primer composition, and a method for producing the laminate.

### DETAILED DESCRIPTION OF THE INVENTION

Hereinafter, embodiments of the present invention will be described in detail, but the present invention is not limited to the following embodiments, and can be carried out with appropriate modifications within the scope of the object of the present invention.

### <<Primer Composition>>

The primer composition is used for forming a primer layer between a substrate and a cured product layer comprising a cured product of a photosensitive composition, when forming the cured product layer above the substrate. The photosensitive composition contains a photocurable compound (a) having an ethylenic unsaturated double bond-containing group and a photopolymerization initiating agent (b). The primer composition contains a base material component (A), a compound (B), and a solvent (S). The base material component (A) is a compound not forming a covalent bond by a reaction with the ethylenic unsaturated double bond-containing group in the photocurable compound (a), and contains a resin (A1) and/or a polymerizable compound (A2). The polymerizable compound (A2) is a compound polymerizable by a polymerization mechanism other than radical polymerization. The compound (B) has a functional group capable of forming a covalent bond by a reaction with the ethylenic unsaturated double bond-containing group in the photocurable compound (a), and the functional group is at least one selected from the group consisting of an ethylenic unsaturated double bond-containing group, an amino group, a hydrosilyl group, and a thiol group.

The primer composition can improve the adhesion between the substrate and the cured product layer regardless of the type of the substrate. For the following reasons, it is presumed that such an effect is exerted. Since the compound (B) has a predetermined functional group capable of forming a covalent bond by a reaction with the ethylenic unsaturated double bond-containing group in the photocurable compound (a) in the photosensitive composition, a covalent bond can be formed between the primer layer and the cured product layer. In addition, the primer composition also contains the base material component (A), and thus is excellent in uniformity of a thin film (primer layer) having a film thickness of several nm or more and several tens of nm or less. Accordingly, the adhesion between the substrate and the cured product layer is synergistically improved, and as a result, the adhesion between the substrate and the cured product layer can be improved regardless of the type of the substrate.

### <Base Material Component (A)>

The base material component (A) is a compound which does not form a covalent bond by a reaction with the ethylenic unsaturated double bond-containing group in the photocurable compound (a) in the photosensitive composition (specifically, for example, compound not having ethylenic unsaturated double bond-containing group, amino group, hydrosilyl group, or thiol group). The base material component (A) contains a resin (A1) and/or a polymerizable compound (A2).

### [Resin (A1)]

The resin (A1) is not particularly limited as long as the resin (A1) is a resin material that provides a shaping property such as a film forming property to the primer composition, and for example, a water-soluble resin (A1-1) or a phenolic hydroxy group-containing resin (A1-2) is preferable.

### (Water-Soluble Resin (A1-1))

Since the water-soluble resin (A1-1) is hardly dissolved in a solvent such as propylene glycol monomethyl ether acetate (PM) widely used in the photosensitive composition, mixing hardly occurs between the primer layer and a coating film of the photosensitive composition when the photosensitive composition is coated on the primer layer, and as a result, the adhesion between the substrate and the cured product layer is easily improved. In the present description, "water-soluble" means that 0.5 g or more of a solute (water-soluble resin) is dissolved in 100 g of water or alkaline aqueous solution at 25°C.

Examples of the water-soluble resin (A1-1) include vinyl resins, polysaccharides, polyethylene oxide, polyglycerin, and water-soluble nylon. The vinyl resin is not particularly limited as long as it is a homopolymer or copolymer of a monomer having a vinyl group and is a water-soluble resin. Examples of the vinyl resin include polyvinyl alcohol resins. Examples of the polyvinyl alcohol resins include polyvinyl alcohol, polyvinyl acetal (also including vinyl acetate copolymer), butene diol-vinyl alcohol copolymers, polyvinyl alcohol polyacrylic acid block copolymers, and polyvinyl alcohol polyacrylic acid ester block copolymers. Examples of the vinyl resin also include polyvinyl pyrolidone, polyacrylamide, poly(N-alkyl acrylamide), polyallylamine, poly(N-alkylallylamine), partially amidized polyallylamine, poly(diallylamine), allylamine-diallylamine copolymers, and polyacrylic acid. Examples of the polysaccharides include cellulose resins, dextrin, and dextran. The cellulose resin is not particularly limited as long as it is a water-soluble cellulose derivative. Examples of the cellulose resin include methyl cellulose, ethyl cellulose, and hydroxypropyl cellulose. These resins may be used alone or in combination of two or more thereof. The water-soluble resin (A1-1) is preferably a vinyl resin or a polysaccharide, and more preferably a polyvinyl alcohol, polyvinyl pyrolidone, a polysaccharide, or a poly(meth)acrylic acid.

A weight average molecular weight (Mw) of the water-soluble resin (A1-1) is not particularly limited, and is, for example, 1,000 or more and 100,000 or less, or 1,000 or more and 50,000 or less.

A solubility parameter (SP value) of the water-soluble resin (A1-1) is, for example, 10 or more and 20 or less. A difference between the SP value of the water-soluble resin (A1-1) and the SP value of a solvent (S1) in the photosensitive composition is preferably 2.30 or more. In a case where the difference is 2.30 or more, mixing hardly occurs between the primer layer and the coating film of the photosensitive composition when the photosensitive composition is applied onto the primer layer, and as a result, the adhesion between the substrate and the cured product layer is easily improved. In the present description, the SP value is a value calculated by the method of Fedors (R. F. Fedors: "A Method for Estimating Both the Solubility Parameters and Molar Volumes of Liquids", Polym. Eng. Sci., Vol.14, No.2, 147-154 (1974)).

A content of the water-soluble resin (A1-1) is preferably 10% by mass or more, more preferably 30% by mass or more, and still more preferably 40% by mass or more with respect to 100% by mass (total solid content) of the mass of the primer composition excluding the mass of the solvent (S) described below. The content is preferably 90% by mass or less, more preferably 70% by mass or less, and still more preferably 60% by mass or less. Within the above numerical range, good adhesion is easily obtained.

### (Phenolic Hydroxy Group-Containing Resin (A1-2))

The phenolic hydroxy group-containing resin (A1-2) can be crosslinked with a cyclic ether group-containing compound (A2-1) or a methylol-type crosslinking agent (C) described later to form a curable primer layer. Examples of the phenolic hydroxy group-containing resin (A1-2) include a resin having a constituent unit derived from hydroxystyrene which may have a substituent, a resin having a constituent unit derived from a (meth)acrylate ester having a hydroxyphenyl group which may have a substituent, and a novolac resin.

When the phenolic hydroxy group-containing resin (A1-2) is a resin having a constituent unit derived from hydroxystyrene which may have a substituent or a resin having a constituent unit derived from a (meth)acrylate ester having a hydroxyphenyl group which may have a substituent, the amount of the constituent unit having a phenolic hydroxy group in the resin is preferably 50 mol% or more, more preferably 70 mol% or more, still more preferably 90 mol% or more, and most preferably 100 mol%, based on all constituent units.

The constituent unit derived from hydroxystyrene which may have a substituent is preferably a constituent unit represented by the following formula (a1-2-1). 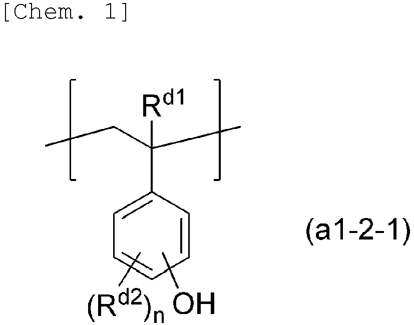 (In the formula (a1-2-1), R^{d1} is a hydrogen atom or an alkyl group having 1 or more and 6 or less carbon atoms. R^{d2} is an alkyl group having 1 or more and 6 or less carbon atoms, an alkoxy group having 1 or more and 6 or less carbon atoms, a halogen atom, or a cyano group. n is an integer of 0 or more and 4 or less. When n is an integer of 2 or more and 4 or less, a plurality of R^{d2} may be the same or different.)

The alkyl group having 1 or more and 6 or less carbon atoms is, for example, a linear or branched alkyl group having 1 or more and 6 or less carbon atoms. Examples of the linear or branched alkyl group include a methyl group, an ethyl group, an n-propyl group, an isopropyl group, an n-butyl group, an isobutyl group, a tert-butyl group, an n-pentyl group, an isopentyl group, and a neopentyl group. The alkoxy group having 1 or more and 6 or less carbon atoms is, for example, a linear or branched alkoxy group having 1 or more and 6 or less carbon atoms. Examples of the linear or branched alkyl group include a methoxy group, an ethoxy group, an n-propyloxy group, an isopropyloxy group, an n-butyloxy group, an isobutyloxy group, a tert-butyloxy group, an n-pentyloxy group, an isopentyloxy group, and a neopentyloxy group. Examples of the halogen atom include a fluorine atom, a chlorine atom, a bromine atom, and an iodine atom.

Preferable specific examples of the monomer providing the constituent unit represented by the formula (a1-2-1) include 4-hydroxystyrene, 3-hydroxystyrene, 2-hydroxystyrene, α-methyl-4-hydroxystyrene, α-methyl-3-hydroxystyrene, α-methyl-2-hydroxystyrene, α-ethyl-4-hydroxystyrene, α-ethyl-3-hydroxystyrene, and α-ethyl-2-hydroxystyrene. Among them, 4-hydroxystyrene, 3-hydroxystyrene, α-methyl-4-hydroxystyrene, and α-methyl-3-hydroxystyrene are preferable, and 4-hydroxystyrene is more preferable.

As the constituent unit derived from a (meth)acrylate ester having a hydroxyphenyl group which may have a substituent, a constituent unit represented by the following formula (a1-2-2) is preferable. 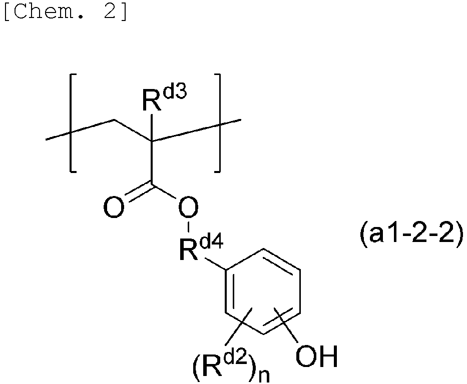 (In the formula (a1-2-2), R^{d2} and n are the same as those in the formula (a1-2-2). R^{d3} is a hydrogen atom or a methyl group. R^{d4} is a single bond or an alkylene group having 1 or more and 4 or less carbon atoms.)

Examples of the alkylene group represented by R^{d4} include a methylene group, an ethane-1,2-diyl group (ethylene group), an ethan-1,1-diyl group, a propane-1,3-diyl group, a propane-1,2-diyl group, a propane-2,2-diyl group, a propane-3,3-diyl group, and a butane-1,4-diyl group. Among them, a methylene group, an ethylene group, a propane-1,3-diyl group, and a butane-1,4-diyl group are preferable, and a methylene group and an ethylene group are more preferable.

Preferable specific examples of the monomer providing the constituent unit represented by the formula (a1-2-2) include phenolic hydroxy group-containing acrylates such as 4-hydroxyphenyl acrylate, 3-hydroxyphenyl acrylate, 2-hydroxyphenyl acrylate, 4-hydroxybenzyl acrylate, 3-hydroxybenzyl acrylate, 2-hydroxybenzyl acrylate, 4-hydroxyphenethyl acrylate, 3-hydroxyphenethyl acrylate, and 2-hydroxyphenethyl acrylate; and phenolic hydroxy group-containing methacrylates such as 4-hydroxyphenyl methacrylate, 3-hydroxyphenyl methacrylate, 2-hydroxyphenyl methacrylate, 4-hydroxybenzyl methacrylate, 3-hydroxybenzyl methacrylate, 2-hydroxybenzyl methacrylate, 4-hydroxyphenethyl methacrylate, 3-hydroxyphenethyl methacrylate, and 2-hydroxyphenethyl methacrylate. Among them, 4-hydroxyphenyl acrylate, 3-hydroxyphenyl acrylate, 4-hydroxybenzyl acrylate, 3-hydroxybenzyl acrylate, 4-hydroxyphenyl methacrylate, 3-hydroxyphenyl methacrylate, 4-hydroxybenzyl methacrylate, and 3-hydroxybenzyl methacrylate are preferable, and 4-hydroxyphenyl acrylate, 4-hydroxybenzyl acrylate, 4-hydroxyphenyl methacrylate, and 4-hydroxybenzyl methacrylate are more preferable.

When the phenolic hydroxy group-containing resin (A1-2) is a polymer of a monomer having an unsaturated bond, the phenolic hydroxy group-containing resin (A1-2) may be a copolymer of a monomer having a phenolic hydroxy group and another monomer having no phenolic hydroxy group. Examples of such other monomers include known radical polymerizable compounds and anionic polymerizable compounds. Examples of such a polymerizable compound include monocarboxylic acids such as acrylic acid, methacrylic acid, and crotonic acid; dicarboxylic acids such as maleic acid, fumaric acid, and itaconic acid; methacrylic acid derivatives having a carboxy group and an ester bond, such as 2-methacryloyloxyethyl succinic acid, 2-methacryloyloxyethyl maleic acid, 2-methacryloyloxyethyl phthalic acid, and 2-methacryloyloxyethyl hexahydrophthalic acid; (meth)acrylic acid alkyl esters such as methyl (meth)acrylate, ethyl (meth)acrylate, and butyl (meth)acrylate; (meth)acrylic acid hydroxyalkyl esters such as 2-hydroxyethyl (meth)acrylate and 2-hydroxypropyl (meth)acrylate; (meth)acrylic acid aryl esters such as phenyl (meth)acrylate and benzyl (meth)acrylate; dicarboxylic acid diesters such as diethyl maleate and dibutyl fumarate; vinyl group-containing aromatic compounds such as styrene, α-methylstyrene, chlorostyrene, chloromethylstyrene, and vinyl toluene; vinyl group-containing aliphatic compounds such as vinyl acetate; conjugated diolefins such as butadiene and isoprene; nitrile group-containing polymerizable compounds such as acrylonitrile and methacrylonitrile; and chlorine-containing polymerizable compounds such as vinyl chloride and vinylidene chloride.

The novolac resin is not particularly limited, and various novolac resins known in the related art can be used. Examples of the novolac resin include resins obtained by addition and condensation of an aromatic compound having a phenolic hydroxy group (hereinafter, simply referred to as "phenols") and aldehydes in the presence of an acid catalyst.

### (Phenols)

Examples of the phenols used for preparing the novolac resin include phenols; cresols such as o-cresol, m-cresol, and p-cresol; xylenols such as 2,3-xylenol, 2,4-xylenol, 2,5-xylenol, 2,6-xylenol, 3,4-xylenol, and 3,5-xylenol; ethylphenols such as o-ethylphenol, m-ethylphenol, and p-ethylphenol; alkylphenols such as 2-isopropylphenol, 3-isopropylphenol, 4-isopropylphenol, o-butylphenol, m-butylphenol, p-butylphenol, and p-tert-butylphenol; trialkyl phenols such as 2,3,5-trimethylphenol and 3,4,5-trimethylphenol; polyvalent phenols such as resorcinol, catechol, hydroquinone, hydroquinone monomethyl ether, pyrogallol, and fluoroglycinol; alkyl polyvalent phenols such as alkyl resorcin, alkyl catechol, and alkyl hydroquinone (all alkyl groups having 1 or more and 4 or less carbon atoms); α-naphthol; β-naphthol; hydroxydiphenyl; and bisphenol A. These phenols may be used alone or in combination of two or more thereof.

### (Aldehydes)

Examples of the aldehydes used for preparing the novolac resin include formaldehyde, paraformaldehyde, furfural, benzaldehyde, nitrobenzaldehyde, and acetaldehyde. These aldehydes may be used alone or in combination of two or more thereof.

The phenolic hydroxy group-containing resin (A1-2) described above is preferably a resin having a constituent unit derived from hydroxystyrene which may have a substituent, more preferably a resin having a constituent unit derived from hydroxystyrene, still more preferably a homopolymer of hydroxystyrene, and particularly preferably a homopolymer of 4-hydroxystyrene.

Mw of the phenolic hydroxy group-containing resin (A1-2) is not particularly limited, and is, for example, 1,000 or more and 100,000 or less, 1,000 or more and 50,000 or less, or 1,000 or more and 10,000 or less.

A content of the phenolic hydroxy group-containing resin (A1-2) is preferably 10% by mass or more, more preferably 30% by mass or more, and still more preferably 40% by mass or more with respect to 100% by mass (total solid content) of the mass of the primer composition excluding the mass of the solvent (S) described below. The content is preferably 90% by mass or less, more preferably 70% by mass or less, and still more preferably 60% by mass or less. Within the above numerical range, good adhesion is easily obtained.

### [Polymerizable Compound (A2)]

The polymerizable compound (A2) is a compound polymerizable by a polymerization mechanism other than radical polymerization. The polymerizable compound (A2) is preferably a cyclic ether group-containing compound (A2-1).

### (Cyclic Ether Group-Containing Compound (A2-1))

Examples of the cyclic ether group-containing compound (A2-1) include epoxy compounds and oxetane compounds.

Examples of the epoxy compound include aromatic epoxy compounds, alicyclic epoxy compounds, and aliphatic epoxy compounds.

Examples of the aromatic epoxy compound include glycidyl ethers of monovalent or polyvalent phenols having at least one aromatic ring (phenol, biphenol, bisphenol A, bisphenol F, phenol novolac, cresol novolac, and bromide thereof or alkylene oxide adducts thereof); and glycidyl esters of monovalent or polyvalent carboxylic acids having at least one aromatic ring (phthalic acid, 3-methyl phthalic acid, and the like) (diglycidyl phthalate, diglycidyl-3-methyl phthalate, and the like).

Examples of the alicyclic epoxy compound include a compound obtained by epoxidizing a compound having at least one cyclohexene or cyclopentene ring with an oxidizing agent (3,4-epoxycyclohexylmethyl-3,4-epoxycyclohexane carboxylate), 3,4-epoxy-1-methylcyclohexyl-3,4-epoxy-1-methylhexane carboxylate, 6-methyl-3,4-epoxycyclohexylmethyl-6-methyl-3,4-epoxycyclohexane carboxylate, 3,4-epoxy-3-methylcyclohexylmethyl-3,4-epoxy-3-methylcyclohexane carboxylate, 3,4-epoxy-5-methylcyclohexylmethyl-3,4-epoxy-5-methylcyclohexane carboxylate, 2-(3,4-epoxycyclohexyl-5,5-spiro-3,4-epoxy)cyclohexane methadioxane, bis(3,4-epoxycyclohexylmethyl)adipate, 3,4-epoxy-6-methylcyclohexyl carboxylate, methylene bis(3,4-epoxycyclohexane), dicyclopentadiene diepoxide, ethylene bis(3,4-epoxycyclohexane carboxylate), and the like).

Examples of the aliphatic epoxy compound include polyglycidyl ethers of aliphatic polyvalent alcohols or alkylene oxide adducts thereof (1,4-butanediol diglycidyl ether, 1,6-hexanediol diglycidyl ether, hydrogenated bisphenol A diglycidyl ether, triglycidyl ether of glycerin, triglycidyl ether of trimethylolpropane, tetraglycidyl ether of sorbitol, hexaglycidyl ether of dipentaerythritol, or the like), polyglycidyl esters of aliphatic polybasic acids (diglycidyl tetrahydrophthalate, diglycidyl hexahydrophthalate, diglycidyl hexahydro-3-methyl phthalate, or the like), epoxidized products of long chain unsaturated compounds (epoxidized soybean oil, epoxidized polybutadiene, or the like), glycidyl group-containing polymers (homopolymers of glycidyl (meth)acrylate, copolymers of homopolymers and another unsaturated monomer, or the like), and polyfunctional epoxides having a dimethylsiloxane skeleton (Journal of Polym. Sci., Part A, Polym. Chem., Vol. 28, 497 (1990)).

Examples of the oxetane compound include 3-ethyl-3-hydroxymethyloxetane, (3-ethyl-3-oxetanylmethoxy)methylbenzene, [1-(3-ethyl-3-oxetanylmethoxy)ethyl]phenyl ether, isobutoxymethyl(3-ethyl-3-oxetanylmethyl)ether, isobornyloxyethyl(3-ethyl-3-oxetanylmethyl)ether, isobornyl(3-ethyl-3-oxetanylmethyl) ether, 2-ethylhexyl(3-ethyl-3-oxetanylmethyl)ether, ethyl diethylene glycol(3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofurfuryl(3-ethyl-3-oxetanylmethyl)ether, tetrabromophenyl(3-ethyl-3-oxetanylmethyl)ether, 2-tetrabromophenoxyethyl(3-ethyl-3-oxetanylmethyl)ether, tribromophenyl(3-ethyl-3-oxetanylmethyl)ether, 2-tribromophenoxyethyl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, butoxyethyl(3-ethyl-3-oxetanylmethyl)ether, pentachlorophenyl(3-ethyl-3-oxetanylmethyl)ether, pentabromophenyl(3-ethyl-3-oxetanylmethyl)ether, bornyl(3-ethyl-3-oxetanylmethyl)ether, 3,7-bis(3-oxetanyl)-5-oxa-nonane, 3,3'-(1,3-(2-methylenyl)propanediyl bis(oxymethylene))bis(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl)ether, dicyclopentenylbis(3-ethyl-3-oxetanylmethyl)ether, triethylene glycol bis(3-ethyl-3-oxetanylmethyl)ether, tetraethylene glycol bis(3-ethyl-3-oxetanylmethyl)ether, tricyclodecanediyldimethylene(3-ethyl-3-oxetanylmethyl)ether, trimethylolpropane tris(3-ethyl-3-oxetanylmethyl)ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl)ether, pentaerythritol tetrakis(3-ethyl-3-oxetanylmethyl)ether, polyethylene glycol bis(3-ethyl-3-oxetanylmethyl)ether, dipentaerythritol hexakis(3-ethyl-3-oxetanylmethyl)ether, dipentaerythritol pentakis(3-ethyl-3-oxetanylmethyl)ether, dipentaerythritol tetrakis(3-ethyl-3-oxetanylmethyl)ether, 3-ethyl-3-phenoxymethyloxetane, 3-ethyl-3-(4-methylphenoxy)methyloxetane, 3-ethyl-3-(4-fluorophenoxy)methyloxetane, 3-ethyl-3-(1-naphthoxy)methyloxetane, 3-ethyl-3-(2-naphthoxy)methyloxetane, 3-ethyl-3-{[3-(ethoxy silyl)propoxy]methyl}oxetane, oxetanylsilsesquioxane oxetane, and phenol novolac oxetane.

A content of the cyclic ether group-containing compound (A2-1) is preferably 10% by mass or more, more preferably 30% by mass or more, and still more preferably 40% by mass or more with respect to 100% by mass (total solid content) of the mass of the primer composition excluding the mass of the solvent (S) described later. The content is preferably 90% by mass or less, more preferably 70% by mass or less, and still more preferably 60% by mass or less. Within the above numerical range, good adhesion is easily obtained.

### (Other Base Material Components)

Examples of the other base material component (A) include materials for forming thermosetting polyurethane (polyol and diisocyanate) and polyamic acid.

A content of the base material component (A) is preferably 10% by mass or more, more preferably 30% by mass or more, and still more preferably 40% by mass or more with respect to 100% by mass (total solid content) of the mass of the primer composition excluding the mass of the solvent (S) described later. The content is preferably 90% by mass or less, more preferably 70% by mass or less, and still more preferably 60% by mass or less. Within the above numerical range, good adhesion is easily obtained.

### <Compound (B)>

The compound (B) has a functional group capable of forming a covalent bond by a reaction with the ethylenic unsaturated double bond-containing group in the photocurable compound (a). The functional group in the compound (B) is at least one selected from the group consisting of an ethylenic unsaturated double bond-containing group, an amino group, a hydrosilyl group, and a thiol group.

Examples of the ethylenic unsaturated double bond-containing group include a vinyl group and a (meth)acryloyl group. The compound (B) having an ethylenic unsaturated double bond-containing group is preferably a compound having a (meth)acryloyl group such as a (meth)acrylate compound or a (meth)acrylamide compound, and more preferably a (meth)acrylate compound. The compound (B) having an ethylenic unsaturated double bond-containing group includes a monofunctional compound and a polyfunctional compound.

Examples of the monofunctional compound having an ethylenic unsaturated double bond-containing group include (meth)acrylamide, methylol (meth)acrylamide, methoxymethyl (meth)acrylamide, ethoxymethyl (meth)acrylamide, propoxymethyl (meth)acrylamide, butoxymethoxymethyl (meth)acrylamide, N-methylol (meth)acrylamide, N-hydroxymethyl (meth)acrylamide, (meth)acrylic acid, fumaric acid, maleic acid, maleic anhydride, itaconic acid, itaconic anhydride, citraconic acid, citraconic anhydride, crotonic acid, 2-acrylamide-2-methylpropane sulfonic acid, tert-butylacrylamide sulphonic acid, methyl (meth)acrylate, ethyl (meth)acrylate, butyl (meth)acrylate, 2-ethylhexyl (meth)acrylate, cyclohexyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, glycerin mono(meth)acrylate, tetrahydrofurfuryl (meth)acrylate, dimethylamino (meth)acrylate, glycidyl (meth)acrylate, 2,2,2-trifluoroethyl (meth)acrylate, 2,2,3,3-tetrafluoropropyl (meth)acrylate, and half (meth)acrylate of phthalic acid derivatives. These monofunctional compounds may be used alone or in combination of two or more thereof.

Examples of the polyfunctional compound having an ethylenic unsaturated double bond-containing group include ethylene glycol di(meth)acrylate, diethylene glycol di(meth)acrylate, tetraethylene glycol di(meth)acrylate, propylene glycol di(meth)acrylate, polypropylene glycol di(meth)acrylate, butylene glycol di(meth)acrylate, neopentyl glycol di(meth)acrylate, 1,6-hexane glycol di(meth)acrylate, trimethylolpropane tri(meth)acrylate, glycerin di(meth)acrylate, pentaerythritol triacrylate, pentaerythritol tetraacrylate, dipentaerythritol pentaacrylate, dipentaerythritol hexaacrylate, pentaerythritol di(meth)acrylate, pentaerythritol tri(meth)acrylate, pentaerythritol tetra(meth)acrylate, dipentaerythritol penta(meth)acrylate, dipentaerythritol hexa(meth)acrylate, 2,2-bis(4-(meth)acryloxydiethoxyphenyl)propane, 2,2-bis(4-(meth)acryloxypolyethoxyphenyl) propane, 2-hydroxy-3-(meth)acryloyloxypropyl(meth)acrylate, ethylene glycol diglycidyl ether di(meth)acrylate, diethylene glycol diglycidyl ether di(meth)acrylate, phthalic acid diglycidyl ester di(meth)acrylate, glycerin triacrylate, glycerin polyglycidyl ether poly(meth)acrylate, urethane (meth)acrylate (i.e., tolylene diisocyanate), a reaction product of trimethylhexamethylene diisocyanate, hexamethylene diisocyanate, and 2-hydroxyethyl (meth)acrylate, methylene bis(meth)acrylamide, (meth)acrylamide methylene ether, a polyfunctional compound of a condensate of a polyvalent alcohol and N-methylol (meth)acrylamide, and triacrylic formal. These polyfunctional compounds may be used alone or in combination of two or more thereof.

As the compound (B) having an amino group, polyethyleneimine and an olefin-based polymer having a constituent unit derived from an olefin having an amino group are preferable, and polyethyleneimine is more preferable.

Examples of the olefin-based polymer having a constituent unit derived from an olefin having an amino group include, as the olefin having an amino group, allylamine, 3-butenylamine, 4-pentenylamine, and 5-hexenylamine. A content of the constituent unit derived from an olefin having an amino group in the olefin-based polymer is not particularly limited. The content of the constituent unit derived from an olefin having an amino group in the olefin-based polymer is preferably 70% by mass or more, more preferably 80% by mass or more, still more preferably 90% by mass or more, and particularly preferably 100% by mass. Examples of the other olefin which may be copolymerized with the olefin having an amino group in the olefin-based polymer include chain olefins such as ethylene, propylene, 1-butene, 1-pentene, 1-hexene, 1-heptene, 1-octene, 1-nonene, 1-decene, 1-undecene, and 1-dodecene; and cyclic olefins such as cyclopentene, cyclohexene, cycloheptene, cyclooctene, cyclohexadiene, cycloheptadiene, and cyclooctadiene.

Polyethyleneimine is a polymer having the following partial structure. As the polyethyleneimine, branched polyethyleneimine or linear polyethyleneimine can be used.

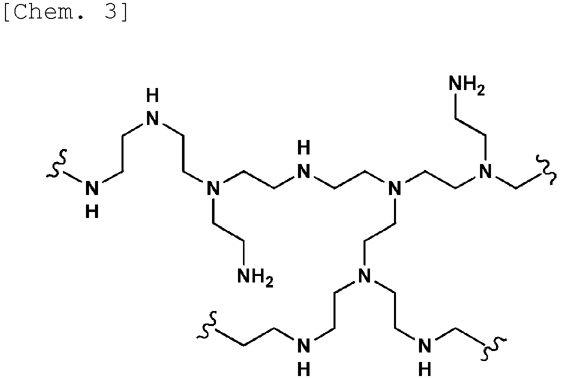

Examples of the compound (B) having a hydrosilyl group include organosiloxane compounds having a hydrosilyl group. Examples of the organosiloxane compound having a hydrosilyl group include organosiloxanes having a main chain in a cyclic compound or a linear or branched chain compound having only a siloxane unit (-Si-O-).

The organosiloxane compound having a hydrosilyl group is preferably a hydrolytic condensate obtained by hydrolyzing and condensing one or more organosilanes represented by the following formula and having at least one hydrosilyl group and at least one monovalent organic group having 1 or more and 50 or less carbon atoms derived from the following R⁴ in one molecule.
[Chem. 4]

**R⁴ₓSi(OR⁵)₄₋ₓ** **(20)**

(In the formula, R⁴ is a hydrogen atom or a monovalent organic group having 1 or more and 50 or less carbon atoms, R⁵ is a monovalent organic group, and x represents an integer of 0 or more and 2 or less.)
The hydrolytic condensate belongs to the organosiloxane described above having a main chain having only a siloxane unit (-Si-O-).

Here, examples of the monovalent organic group for R⁵ include an alkyl group, an aryl group, an allyl group, and a glycidyl group. Among them, an alkyl group and an aryl group are preferable. The monovalent organic group having 1 or more and 50 or less carbon atoms as R⁴ is preferably an alkyl group or an aryl group having 1 or more and 20 or less carbon atoms. The number of carbon atoms of the alkyl group is preferably 1 or more and 5 or less, and specific examples of the alkyl group include a methyl group, an ethyl group, a propyl group, and a butyl group. In addition, the alkyl group may be linear or branched, and the hydrogen atom of the alkyl group may be substituted by a fluorine atom. The aryl group is preferably a group having 6 or more and 20 or less carbon atoms, and examples thereof include a phenyl group and a naphthyl group.

Examples of the compound (B) having a thiol group include polyfunctional thiol compounds. Specific examples of the polyfunctional thiol compound (B) include 1,2-benzenedithiol, 1,3-benzenedithiol, 1,4-benzenedithiol, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris (mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, 2,4-di(p-mercaptophenyl)pentane, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, and 1,3,5-tris(mercaptoethylthio)benzene.

A content of the compound (B) is preferably 10% by mass or more, more preferably 30% by mass or more, and still more preferably 40% by mass or more with respect to 100% by mass (total solid content) of the mass of the primer composition excluding the mass of the solvent (S) described below. The content is preferably 90% by mass or less, more preferably 70% by mass or less, and still more preferably 60% by mass or less. Within the above numerical range, good adhesion is easily obtained.

The content of the compound (B) is preferably 20 parts by mass or more, more preferably 50 parts by mass or more, and still more preferably 80 parts by mass or more with respect to 100 parts by mass of the base material component (A). The content is preferably 500 parts by mass or less, more preferably 200 parts by mass or less, and still more preferably 125 parts by mass or less. Within the above numerical range, good adhesion is easily obtained.

### <Methylol-Type Crosslinking Agent (C)>

When the primer composition contains the phenolic hydroxy group-containing resin (A1-2), the primer composition preferably further contains the methylol-type crosslinking agent (C). The methylol-type crosslinking agent (C) is a crosslinking agent having two or more crosslinkable groups selected from a methylol group and an alkoxymethyl group.

Examples of the methylol-type crosslinking agent (C) include a melamine-based crosslinking agent, a urea-based crosslinking agent, an alkylene urea-based crosslinking agent, a glycoluril-based crosslinking agent, and a phenol-based crosslinking agent. The term "lower" as used herein means that the number of carbon atoms is 1 or more and 5 or less.

Examples of the melamine-based crosslinking agent include a compound in which melamine and formaldehyde are reacted to substitute a hydrogen atom of an amino group with a hydroxymethyl group, and a compound in which melamine, formaldehyde, and a lower alcohol are reacted to substitute a hydrogen atom of an amino group with a lower alkoxymethyl group. Specific examples thereof include hexamethoxymethyl melamine, hexaethoxymethyl melamine, hexapropoxymethyl melamine, and hexabutoxybutyl melamine. Among them, hexamethoxymethyl melamine is preferable.

Examples of the urea-based crosslinking agent include a compound in which urea and formaldehyde are reacted to substitute a hydrogen atom of an amino group with a hydroxymethyl group, and a compound in which urea, formaldehyde, and a lower alcohol are reacted to substitute a hydrogen atom of an amino group with a lower alkoxymethyl group. Specific examples thereof include bismethoxymethyl urea, bisethoxymethyl urea, bispropoxymethyl urea, and bisbutoxymethyl urea. Among them, bismethoxymethyl urea is preferable.

Examples of the alkylene urea-based crosslinking agent include compounds represented by the following formula (CA-1). 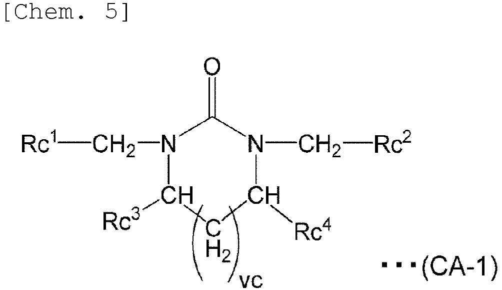 (In the formula (CA-1), Rc¹ and Rc² each independently represent a hydroxy group or a lower alkoxy group. Rc³ and Rc⁴ each independently represent a hydrogen atom, a hydroxy group, or a lower alkoxy group. vc is an integer of 0 or more and 2 or less.)

When Rc¹ and Rc² are lower alkoxy groups, Rc¹ and Rc² are preferably alkoxy groups having 1 or more and 4 or less carbon atoms, and may be linear or branched. Rc¹ and Rc² may be the same as or different from each other, and are more preferably the same as each other. When Rc³ and Rc⁴ are lower alkoxy groups, Rc³ and Rc⁴ are preferably alkoxy groups having 1 or more and 4 or less carbon atoms, and may be linear or branched. Rc³ and Rc⁴ may be the same as or different from each other, and are more preferably the same as each other. vc is preferably 0 or 1. The alkylene urea-based crosslinking agent is particularly preferably a compound in which vc is 0 (ethylene urea-based crosslinking agent) and/or a compound in which vc is 1 (propylene urea-based crosslinking agent).

The compound represented by the formula (CA-1) can be obtained by subjecting alkylene urea and formalin to a condensation reaction and by causing a reaction of this product and a lower alcohol.

Specific examples of the alkylene urea-based crosslinking agent include ethylene urea-based crosslinking agents such as mono- and/or dihydroxymethylated ethylene urea, mono- and/or dimethoxymethylated ethylene urea, mono- and/or diethoxymethylated ethylene urea, mono- and/or dipropoxymethylated ethylene urea, and mono- and/or dibutoxymethylated ethylene urea; propylene urea-based crosslinking agents such as mono- and/or dihydroxymethylated propylene urea, mono- and/or dimethoxymethylated propylene urea, mono- and/or diethoxymethylated propylene urea, mono- and/or dipropoxymethylated propylene urea, and mono- and/or dibutoxymethylated propylene urea; 1,3-di(methoxymethyl) 4,5-dihydroxy-2-imidazolidinone; and 1,3-di(methoxymethyl)-4,5-dimethoxy-2-imidazolidinone.

Examples of the glycoluril-based crosslinking agents include glycoluril derivatives obtained by substituting the N-position with one or both of a hydroxyalkyl group and an alkoxyalkyl group having 1 or more and 4 or less carbon atoms. The glycoluril derivative can be obtained by subjecting glycoluril and formalin to a condensation reaction and by causing a reaction of this product and a lower alcohol. Specific examples of the glycoluril-based crosslinking agents include mono-, di-, tri- and/or tetrahydroxymethylated glycoluril; mono-, di-, tri- and/or tetramethoxymethylated glycoluril; mono-, di-, tri- and/or tetraethoxymethylated glycoluril; mono-, di-, tri- and/or tetrapropoxymethylated glycoluril; and mono-, di-, tri- and/or tetrabutoxymethylated glycoluril.

The phenol-based crosslinking agent is not particularly limited as long as it is a compound having a plurality of phenol nuclear structures in the same molecule, and can be freely selected and used. The crosslinking reactivity is improved when a plurality of phenol nuclear structures are contained. The number of phenol nuclear structures is preferably 2 or more and 5 or less, more preferably 2 or more and 4 or less, and still more preferably 2 or 3.

Preferable specific examples of the glycoluril-based crosslinking agents or the phenol-based crosslinking agents are shown below.

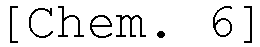

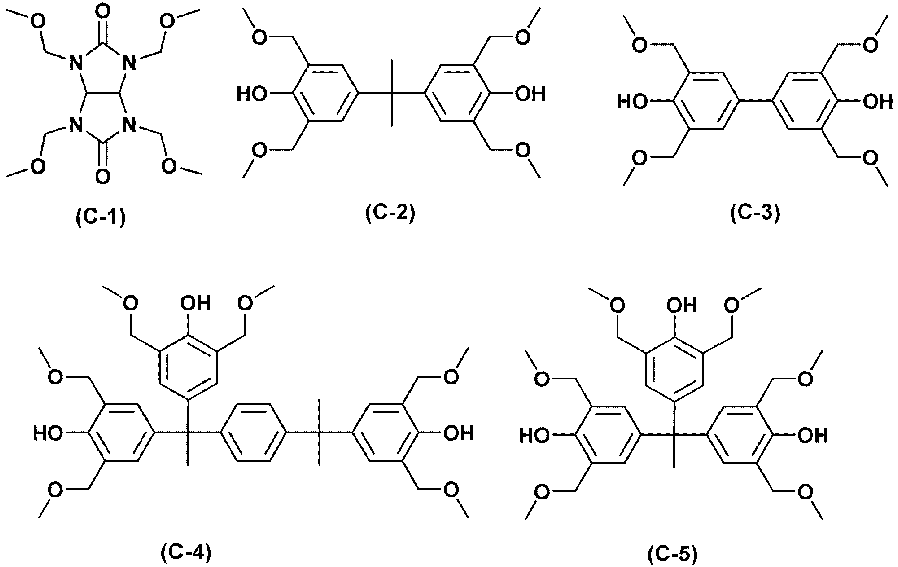

In the primer composition, the methylol-type crosslinking agent (C) may be used alone or in combination of two or more thereof.

A content of the methylol-type crosslinking agent (C) is preferably 0.5% by mass or more, more preferably 3% by mass or more, and still more preferably 5% by mass or more with respect to 100% by mass (total solid content) of the mass of the primer composition excluding the mass of the solvent (S) described below. The content is preferably 20% by mass or less, more preferably 15% by mass or less, and still more preferably 10% by mass or less. Within the above numerical range, good adhesion is easily obtained.

The content of the methylol-type crosslinking agent (C) is preferably 1 part by mass or more, more preferably 5 parts by mass or more, and still more preferably 10 parts by mass or more with respect to 100 parts by mass of the phenolic hydroxy group-containing resin (A1-2). The content is preferably 60 parts by mass or less, more preferably 40 parts by mass or less, and still more preferably 30 parts by mass or less. Within the above numerical range, good adhesion is easily obtained.

### <Acid Generating Agent (D)>

When the primer composition contains the cyclic ether group-containing compound (A2-1), or when the primer composition contains the phenolic hydroxy group-containing resin (A1-2), the cyclic ether group-containing compound (A2-1), and/or the methylol-type crosslinking agent (C), the primer composition preferably further contains an acid generating agent (D).

The acid generating agent (D) is not particularly limited as long as it is a compound to generate an acid upon irradiation with an active ray or radioactive ray and to generate an acid directly or indirectly in response to light. Hereinafter, preferable examples of the acid generating agent that is preferably used will be described.

A first preferable example of the acid generating agent is a compound represented by the following formula (a1).

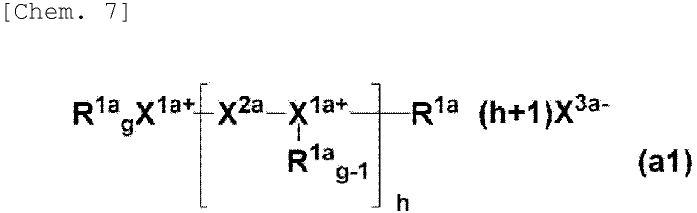

In the formula (a1), X^{1a} represents a sulfur atom or an iodine atom having a valence of g, and g is 1 or 2. h represents the number of repeating units of the structure in parentheses. R^{1a} is an organic group bonded to X^{1a}, and represents an aryl group having 6 or more and 30 or less carbon atoms, a heterocyclic group having 4 or more and 30 or less carbon atoms, an alkyl group having 1 or more and 30 or less carbon atoms, an alkenyl group having 2 or more and 30 or less carbon atoms, or an alkynyl group having 2 or more and 30 or less carbon atoms. R^{1a} may be substituted with at least one group selected from the group consisting of halogen and groups of alkyl, hydroxy, alkoxy, alkylcarbonyl, arylcarbonyl, alkoxycarbonyl, aryloxycarbonyl, arylthiocarbonyl, acyloxy, arylthio, alkylthio, aryl, heterocycle, aryloxy, alkylsulfinyl, arylsulfinyl, alkylsulfonyl, arylsulfonyl, alkyleneoxy, amino, cyano, and nitro. The number of R^{1a} is g+h(g-1)+1, and R^{1a} may be the same as or different from each other. In addition, two or more R^{1a} may be bonded to each other directly, or via -O-, -S-, -SO-, -SO₂-, -NH-, -NR^{2a}-, - CO-, -COO-, -CONH-, an alkylene group having 1 or more and 3 or less carbon atoms, or a phenylene group to form a ring structure containing X^{1a}. R^{2a} is an alkyl group having 1 or more and 5 or less carbon atoms or an aryl group having 6 or more and 10 or less carbon atoms.

X^{2a} is a structure represented by the following formula (a2).

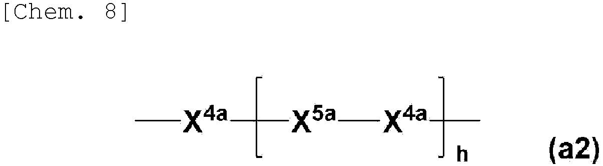

In the formula (a2), X^{4a} represents an alkylene group having 1 or more and 8 or less carbon atoms, an arylene group having 6 or more and 20 or less carbon atoms, or a divalent group of a heterocyclic compound having 8 or more and 20 or less carbon atoms, and X^{4a} may be substituted with at least one selected from the group consisting of halogen and groups of alkyl having 1 or more and 8 or less carbon atoms, alkoxy having 1 or more and 8 or less carbon atoms, aryl having 6 or more and 10 or less carbon atoms, hydroxy, cyano, and nitro. X^{5a} represents -O-, -S-, -SO-, -SO₂-, -NH-, -NR^{2a}-, -CO-, -COO-, -CONH-, an alkylene group having 1 or more and 3 or less carbon atoms, or a phenylene group. h represents the number of repeating units of the structure in parentheses. h+1 X^{4a} and h X^{5a} may be the same or different. R^{2a} is the same as defined above.

X^{3a-} is a counter ion of onium, and examples thereof include a fluorinated alkylfluorophosphate anion represented by the following formula (a17) and a borate anion represented by the following formula (a18).

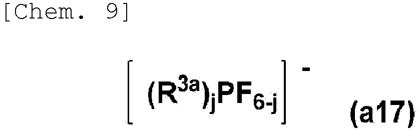

In the formula (a17), R^{3a} represents an alkyl group in which 80% or more of hydrogen atoms are substituted with a fluorine atom. j indicates the number of R^{3a} and is an integer of 1 or more and 5 or less. j R^{3a} may be the same or different.

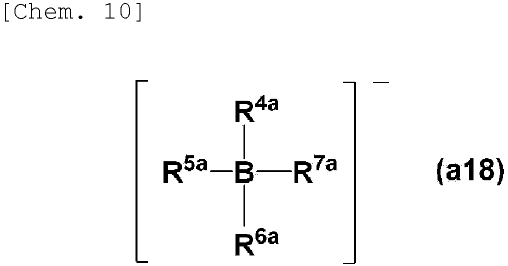

In the formula (a18), R^{4a} to R^{7a} each independently represent a fluorine atom or a phenyl group, and a part or all of hydrogen atoms of the phenyl group may be substituted with at least one selected from the group consisting of a fluorine atom and a trifluoromethyl group.

Examples of the onium ion in the compound represented by the formula (a1) include triphenylsulfonium, tri-p-tolylsulfonium, 4-(phenylthio)phenyldiphenylsulfonium, bis[4-(diphenylsulfonio)phenyl]sulfide, bis[4-[bis[4-(2-hydroxyethoxy)phenyl]sulfonio}phenyl]sulfide, bis{4-[bis(4-fluorophenyl)sulfonio]phenyl}sulfide, 4-(4-benzoyl-2-chlorophenylthio)phenyl bis(4-fluorophenyl)sulfonium, 7-isopropyl-9-oxo-10-thia-9,10-dihydroanthracene-2-yl di-p-tolylsulfonium, 7-isopropyl-9-oxo-10-thia-9,10-dihydroanthracene-2-isodiphenylsulfonium, 2-[(diphenyl)sulfonio]thioxanthone, 4-[4-(4-tert-butylbenzoyl)phenylthio]phenyl di-p-tolylsulfonium, 4-(4-benzoylphenylthio)phenyldiphenylsulfonium, diphenylphenacylsulfonium, 4-hydroxyphenylmethylbenzylsulfonium, 2-naphthylmethyl(1-ethoxycarbonyl)ethylsulfonium, 4-hydroxyphenylmethylphenacylsulfonium, phenyl[4-(4-biphenylthio)phenyl]4-biphenylsulfonium, phenyl[4-(4-biphenylthio)phenyl]3-biphenylsulfonium, [4-(4-acetophenylthio)phenyl]diphenylsulfonium, octadecylmethylphenacylsulfonium, diphenyliodonium, di-p-tolyliodonium, bis(4-dodecylphenyl)iodonium, bis(4-methoxyphenyl)iodonium, (4-octyloxyphenyl)phenyliodonium, bis(4-decyloxy)phenyliodonium, 4-(2-hydroxytetradecyloxy)phenylphenyliodonium, 4-isopropylphenyl(p-tolyl)iodonium, and 4-isobutylphenyl(p-tolyl)iodonium.

Among the onium ions in the compound represented by the formula (a1), preferable examples of onium ions include a sulfonium ion represented by the following formula (a19).

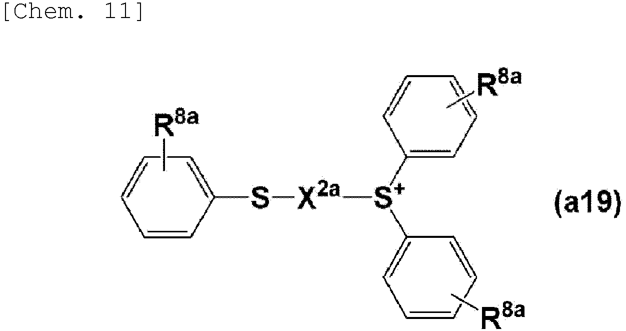

In the formula (a19), R^{8a} each independently represents a group selected from the group consisting of a hydrogen atom, alkyl, hydroxy, alkoxy, alkylcarbonyl, alkylcarbonyloxy, alkyloxycarbonyl, halogen atom, aryl which may have a substituent, and arylcarbonyl. X^{2a} represents the same meaning as X^{2a} in the formula (a1).

Specific examples of the sulfonium ion represented by the formula (a19) include 4-(phenylthio)phenyldiphenylsulfonium, 4-(4-benzoyl-2-chlorophenylthio)phenyl bis(4-fluorophenyl)sulfonium, 4-(4-benzoylphenylthio)phenyldiphenylsulfonium, phenyl[4-(4-biphenylthio)phenyl]4-biphenylsulfonium, phenyl[4-(4-biphenylthio)phenyl]3-biphenylsulfonium, [4-(4-acetophenylthio)phenyl]diphenylsulfonium, and diphenyl[4-(p-terphenylthio)phenyl]diphenylsulfonium.

In the fluorinated alkylfluorophosphate anion represented by the formula (a17), R^{3a} represents an alkyl group substituted with a fluorine atom, and the number of carbon atoms is preferably 1 or more and 8 or less, and more preferably 1 or more and 4 or less. Specific examples of the alkyl group include a linear alkyl group such as methyl, ethyl, propyl, butyl, pentyl, and octyl; a branched alkyl group such as isopropyl, isobutyl, sec-butyl, and tert-butyl; and a cycloalkyl group such as cyclopropyl, cyclobutyl, cyclopentyl, and cyclohexyl. A proportion of the hydrogen atom of the alkyl group, which is substituted with a fluorine atom, is usually 80% or more, preferably 90% or more, and more preferably 100%. When the substitution rate of fluorine atoms is less than 80%, the acid strength of the onium fluorinated alkylfluorophosphate represented by the formula (a1) decreases.

Particularly preferable R^{3a} is a linear or branched perfluoroalkyl group having 1 or more and 4 or less carbon atoms and a substitution rate of fluorine atoms of 100%, and specific examples thereof include CF₃, CF₃CF₂, (CF₃)₂CF, CF₃CF₂CF₂, CF₃CF₂CF₂CF₂, (CF₃)₂CFCF₂, CF₃CF₂(CF₃)CF, and (CF₃)₃C. The number j of R^{3a} is an integer of 1 or more and 5 or less, preferably 2 or more and 4 or less, and particularly preferably 2 or 3.

Preferable specific examples of the fluorinated alkylfluorophosphate anion include [(CF₃CF₂)₂PF₄]⁻, [(CF₃CF₂)₃PF₃]⁻, [((CF₃)₂CF)₂PF₄]⁻, [( (CF₃)₂CF)₃PF₃]⁻, [(CF₃CF₂CF₂)₂PF₄]⁻, [(CF₃CF₂CF₂)₃PF₃]⁻, [((CF₃)₂CFCF₂)₂PF₄]⁻, [((CF₃)₂CFCF₂)₃PF₃]⁻, [(CF₃CF₂CF₂CF₂)₂PF₄]⁻, and [(CF₃CF₂CF₂)₃PF₃]⁻, and among them, [(CF₃CF₂)₃PF₃]⁻, [(CF₃CF₂CF₂)₃PF₃]⁻, [((CF₃)₂CF)₃PF₃]⁻, [((CF₃)₂CF)₂PF₄]⁻, [((CF₃)₂CFCF₂)₃PF₃]⁻, or [((CF₃)₂CFCF₂)₂PF₄]⁻ is particularly preferable.

Preferable specific examples of the borate anion represented by the formula (a18) include tetrakis(pentafluorophenyl)borate ([B(C₆F₅)₄]⁻), tetrakis[(trifluoromethyl)phenyl]borate ([B(C₆H₄CF₃)₄]⁻), difluorobis(pentafluorophenyl)borate ([(C₆F₅)₂BF₂]⁻), trifluoro(pentafluorophenyl)borate ([(C₆F₅)BF₃]⁻), and tetrakis(difluorophenyl)borate ([B(C₆H₃F₂)₄]⁻). Among them, tetrakis(pentafluorophenyl)borate ([B(C₆F₅)₄]⁻) is particularly preferable.

A second example of the preferable acid generating agent includes halogen-containing triazine compounds such as 2,4-bis(trichloromethyl)-6-piperonyl-1,3,5-triazine, 2,4-bis(trichloromethyl)-6-[2-(2-furyl)ethenyl]-s-triazine, 2,4-bis(trichloromethyl)-6-[2-(5-methyl-2-furyl)ethenyl]-s-triazine, 2,4-bis(trichloromethyl)-6-[2-(5-ethyl-2-furyl)ethenyl]-s-triazine, 2,4-bis(trichloromethyl)-6-[2-(5-propyl-2-furyl)ethenyl]-s-triazine, 2,4-bis(trichloromethyl)-6-[2-(3,5-dimethoxyphenyl)ethenyl]-s-triazine, 2,4-bis(trichloromethyl)-6-[2-(3,5-diethoxyphenyl)ethenyl]-s-triazine, 2,4-bis(trichloromethyl)-6-[2-(3,5-dipropoxyphenyl)ethenyl]-s-triazine, 2,4-bis(trichloromethyl)-6-[2-(3-methoxy-5-ethoxyphenyl)ethenyl]-s-triazine, 2,4-bis(trichloromethyl)-6-[2-(3-methoxy-5-propoxyphenyl)ethenyl]-s-triazine, 2,4-bis(trichloromethyl)-6-[2-(3,4-methylenedioxyphenyl)ethenyl]-s-triazine, 2,4-bis(trichloromethyl)-6-(3,4-methylenedioxyphenyl)-s-triazine, 2,4-bis-trichloromethyl-6-(3-bromo-4-methoxy)phenyl-s-triazine, 2,4-bis-trichloromethyl-6-(2-bromo-4-methoxy)phenyl-s-triazine, 2,4-bis-trichloromethyl-6-(2-bromo-4-methoxy)styrylphenyl-s-triazine, 2,4-bis-trichloromethyl-6-(3-bromo-4-methoxy)styrylphenyl-s-triazine, 2-(4-methoxyphenyl)-4,6-bis(trichloromethyl)-1,3,5-triazine, 2-(4-methoxynaphthyl)-4,6-bis(trichloromethyl)-1,3,5-triazine, 2-[2-(2-furyl)ethenyl]-4,6-bis(trichloromethyl)-1,3,5-triazine, 2-[2-(5-methyl-2-furyl)ethenyl]-4,6-bis(trichloromethyl)-1,3,5-triazine, 2-[2-(3,5-dimethoxyphenyl)ethenyl]-4,6-bis(trichloromethyl)-1,3,5-triazine, 2-[2-(3,4-dimethoxyphenyl)ethenyl]-4,6-bis(trichloromethyl)-1,3,5-triazine, 2-(3,4-methylenedioxyphenyl)-4,6-bis(trichloromethyl)-1,3,5-triazine, tris(1,3-dibromopropyl)-1,3,5-triazine, and tris(2,3-dibromopropyl)-1,3,5-triazine; and halogen-containing triazine compounds represented by the following formula (a3) such as tris(2,3-dibromopropyl) isocyanate.

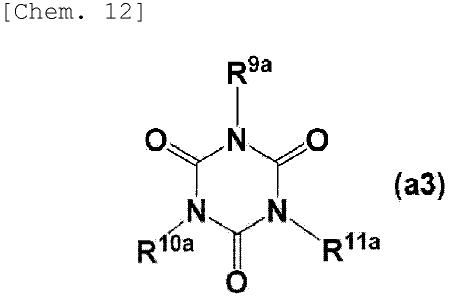

In the formula (a3), R^{9a}, R^{10a}, and R^{11a} each independently represent a halogenated alkyl group.

A third example of the preferable acid generating agent includes oxime sulfonate compounds such as α-(p-toluenesulfonyloxyimino)-phenylacetonitrile, α-(benzenesulfonyloxyimino)-2,4-dichlorophenylacetonitrile, α-(benzenesulfonyloxyimino)-2,6-dichlorophenylacetonitrile, α-(2-chlorobenzenesulfonyloxyimino)-4-methoxyphenylacetonitrile, α-(ethylsulfonyloxyimino)-1-cyclopentenylacetonitrile, 2-[2-(propylsulfonyloxyimino)thiophene-3(2H)-ylidene]-2-(2-methylphenyl)acetonitrile, and a compound represented by the following formula (a4) having an oximesulfonate group.

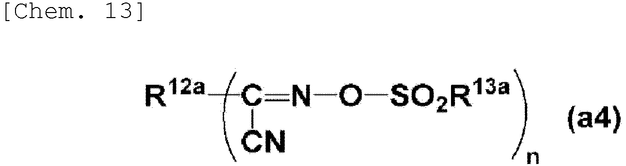

In the formula (a4), R^{12a} represents a monovalent, divalent or trivalent organic group, R^{13a} represents a substituted or unsubstituted saturated hydrocarbon group, an unsaturated hydrocarbon group, or an aromatic compound group, and n represents the number of repeating units of the structure in parentheses.

In the formula (a4), the aromatic compound group indicates a group of a compound exhibiting physical and chemical properties specific to an aromatic compound, and examples thereof include an aryl group such as a phenyl group and a naphthyl group, and a heteroaryl group such as a furyl group and a thienyl group. These may have one or more suitable substituents such as a halogen atom, an alkyl group, an alkoxy group, and a nitro group on the ring. R^{13a} is particularly preferably an alkyl group having 1 or more and 6 or less carbon atoms, and examples thereof include a methyl group, an ethyl group, a propyl group, and a butyl group. In particular, a compound is preferable in which R^{12a} is an aromatic compound group and R^{13a} is an alkyl group having 1 or more and 4 or less carbon atoms.

Examples of a photoacid generating agent represented by the formula (a4) include compounds in which, when n = 1, R^{12a} is a phenyl group, a methylphenyl group, or a methoxyphenyl group, and R^{13a} is a methyl group, and specific examples thereof include α-(methylsulfonyloxyimino)-1-phenylacetonitrile, α-(methylsulfonyloxyimino)-1-(p-methylphenyl)acetonitrile, α-(methylsulfonyloxyimino)-1-(p-methoxyphenyl)acetonitrile, and [2-(propylsulfonyloxyimino)-2,3-dihydroxythiophene-3-ylidene](o-tolyl)acetonitrile. When n = 2, specific examples of the photoacid generating agent represented by the formula (a4) include an acid generating agent represented by the following formula.

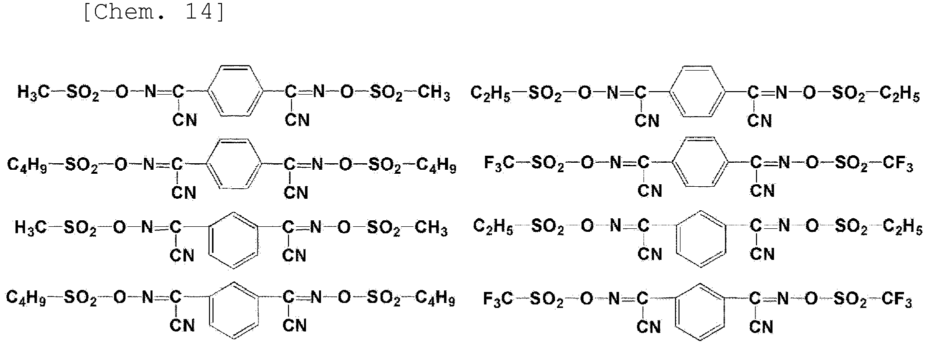

A fourth example of the preferable acid generating agent includes an onium salt having a naphthalene ring in a cation moiety. The expression "having a naphthalene ring" means having a structure derived from naphthalene, and at least two ring structures and aromaticity thereof are maintained. The naphthalene ring may have a substituent such as a linear or branched alkyl group having 1 or more and 6 or less carbon atoms, a hydroxy group, or a linear or branched alkoxy group having 1 or more and 6 or less carbon atoms. The structure derived from a naphthalene ring may be a monovalent group (having one free valence) or a divalent group (having two or more free valences), and is preferably a monovalent group (note that the number of free valence is counted except for portion bonded to substituent). The number of naphthalene rings is preferably 1 or more and 3 or less.

The cation moiety of the onium salt having a naphthalene ring in the cation moiety is preferably a structure represented by the following formula (a5).

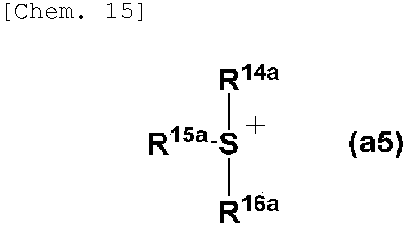

In the formula (a5), at least one of R^{14a}, R^{15a}, or R^{16a} represents a group represented by the following formula (a6), and the remaining represents a linear or branched alkyl group having 1 or more and 6 or less carbon atoms, a phenyl group which may have a substituent, a hydroxy group, or a linear or branched alkoxy group having 1 or more and 6 or less carbon atoms. Alternatively, one of R^{14a}, R^{15a}, or R^{16a} may be a group represented by the following formula (a6), the remaining two may each independently be a linear or branched alkylene group having 1 or more and 6 or less carbon atoms, and terminals thereof may be bonded to each other to form a ring.

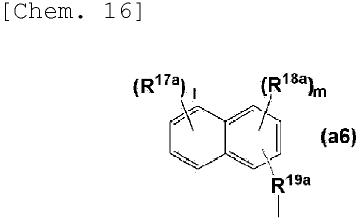

In the formula (a6), R^{17a} and R^{18a} each independently represent a hydroxy group, a linear or branched alkoxy group having 1 or more and 6 or less carbon atoms, or a linear or branched alkyl group having 1 or more and 6 or less carbon atoms, and R^{19a} represents a single bond or a linear or branched alkylene group having 1 or more and 6 or less carbon atoms which may have a substituent. l and m each independently represent an integer of 0 or more and 2 or less, and l+m is 3 or less. However, when there are a plurality of R^{17a}, the plurality of R^{17a} may be the same or different. In addition, when a plurality of R^{18a} are present, the plurality of R^{18a} may be the same or different.

The number of the group represented by the formula (a6) among R^{14a}, R^{15a}, and R^{16a} is preferably one from the viewpoint of the stability of the compound, the remaining is a linear or branched alkylene group having 1 or more and 6 or less carbon atoms, and terminals thereof may be bonded to form a ring. In this case, the two alkylene groups constitute a 3-membered ring to a 9-membered ring containing a sulfur atom. The number of atoms (including sulfur atoms) constituting the ring is preferably 5 or more and 6 or less.

In addition, examples of the substituent which the alkylene group may have include an oxygen atom (in this case, forming carbonyl group together with carbon atom constituting alkylene group) and a hydroxy group.

Examples of the substituent which the phenyl group may have include a hydroxy group, a linear or branched alkoxy group having 1 or more and 6 or less carbon atoms, and a linear or branched alkyl group having 1 or more and 6 or less carbon atoms.

Preferable examples of the cation moiety include those represented by the following formulae (a7) and (a8), and a structure represented by the following formula (a8) is particularly preferable.

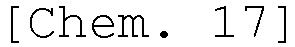

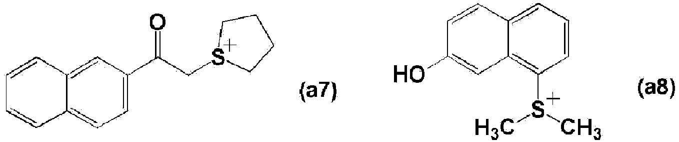

Such a cation moiety may be an iodonium salt or a sulfonium salt, and from the viewpoint of the acid generation efficiency, a sulfonium salt is preferable.

Therefore, as the preferable anion moiety of the onium salt having a naphthalene ring in the cation moiety, an anion capable of forming a sulfonium salt is preferable.

Such an anion moiety of the acid generating agent is a fluoroalkylsulfonate ion or an arylsulfonate ion in which a part or all of hydrogen atoms are replaced with fluorine atoms.

The alkyl group in the fluoroalkylsulfonate ion may be a linear, branched, or cyclic group having 1 or more and 20 or less carbon atoms, and the number of carbon atoms thereof is preferably 1 or more and 10 or less from the bulkiness of the generated acid and a diffusion distance thereof. In particular, a branched or cyclic group has a short diffusion distance, and thus is preferable. In addition, a methyl group, an ethyl group, a propyl group, a butyl group, an octyl group, and the like are preferable because the groups can be synthesized at a low cost.

The aryl group in the aryl sulfonate ion is an aryl group having 6 or more and 20 or less carbon atoms, and examples thereof include an alkyl group, a phenyl group which may or may not be substituted with a halogen atom, and a naphthyl group. In particular, an aryl group having 6 or more and 10 or less carbon atoms is preferable because the aryl group can be synthesized at a low cost. Preferable specific examples thereof include a phenyl group, a toluene sulfonyl group, an ethylphenyl group, a naphthyl group, and a methylnaphthyl group.

A fluorination rate when a part or all of hydrogen atoms are replaced with fluorine atoms in the fluoroalkylsulfonate ion or the arylsulfonate ion is preferably 10% or more and 100% or less, and more preferably 50% or more and 100% or less. In particular, a compound in which all hydrogen atoms are substituted with fluorine atoms is preferable because the acid strength increases. Specific examples thereof include trifluoromethanesulfonate, perfluorobutanesulfonate, perfluorooctanesulfonate, and perfluorobenzenesulfonate.

Among them, preferable examples of the anion moiety include those represented by the following formula (a9).
[Chem. 18]

**R^{20a}SO₃⁻** **(a9)**

In the formula (a9), R^{20a} is a group represented by the following formulae (a10), (a11), and (a12).

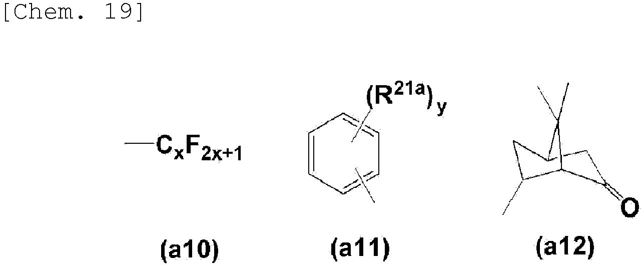

In the formula (a10), x represents an integer of 1 or more and 4 or less. In the formula (a11), R^{21a} represents a hydrogen atom, a hydroxy group, a linear or branched alkyl group having 1 or more and 6 or less carbon atoms, or a linear or branched alkoxy group having 1 or more and 6 or less carbon atoms, and y represents an integer of 1 or more and 3 or less. Among them, trifluoromethanesulfonate and perfluorobutanesulfonate are preferable from the viewpoint of safety.

As the anion moiety, those containing nitrogen represented by the following formulae (a13) and (a14) can also be used.

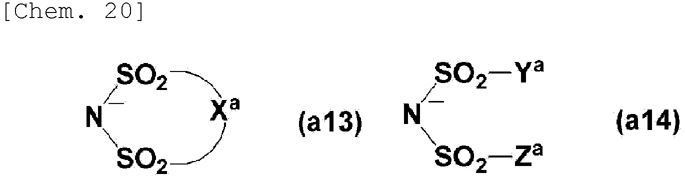

In the formulae (a13) and (a14), X^{a} represents a linear or branched alkylene group in which at least one hydrogen atom is substituted with a fluorine atom, and the number of carbon atoms of the alkylene group is 2 or more and 6 or less, preferably 3 or more and 5 or less, and most preferably 3. Y^{a} and Z^{a} each independently represent a linear or branched alkyl group in which at least one hydrogen atom is substituted with a fluorine atom, and the number of carbon atoms of the alkyl group is 1 or more and 10 or less, preferably 1 or more and 7 or less, and more preferably 1 or more and 3 or less.

The smaller the number of carbon atoms of the alkylene group of X^{a} or the number of carbon atoms of the alkyl group of Y^{a} or Z^{a}, the better the solubility in an organic solvent, which is preferable.

In addition, in the alkylene group of X^{a} or the alkyl group of Y^{a} and Z^{a}, the larger the number of hydrogen atoms substituted with fluorine atoms, the stronger the acid strength, which is preferable. A proportion of fluorine atoms in the alkylene group or the alkyl group, that is, the fluorination rate is preferably 70% or more and 100% or less, more preferably 90% or more and 100% or less, and most preferably a perfluoroalkylene group or perfluoroalkyl group in which all hydrogen atoms are substituted with fluorine atoms.

Preferable examples of the onium salt having a naphthalene ring at the cation moiety include compounds represented by the following formulae (a15) and (a16).

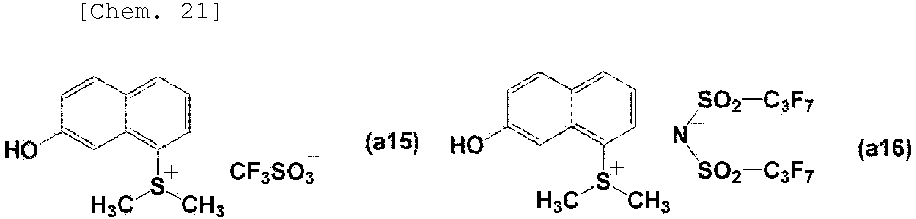

A sixth example of the preferable acid generating agent includes bissulfonyldiazomethanes such as bis(p-toluenesulfonyl)diazomethane, bis(1,1-dimethylethylsulfonyl)diazomethane, bis(cyclohexylsulfonyl)diazomethane, and bis(2,4-dimethylphenylsulfonyl)diazomethane; nitrobenzyl derivatives such as 2-nitrobenzyl p-toluene sulfonate, 2,6-dinitrobenzyl p-toluene sulfonate, nitrobenzyl tosylate, dinitrobenzyl tosylate, nitrobenzyl sulfonate, nitrobenzyl carbonate, and dinitrobenzyl carbonate; sulfonate esters such as pyrogallol trimesilate, pyrogallol tritosylate, benzyltosylate, benzylsulfonate, N-methylsulfonyloxysuccinimide, N-trichloromethylsulfonyloxysuccinimide, N-phenylsulfonyloxymaleimide, and N-methylsulfonyloxyphthalimide; trifluoromethanesulfonate esters such as N-hydroxyphthalimide and N-hydroxynaphthalimide; onium salts such as diphenyliodonium hexafluorophosphate, (4-methoxyphenyl)phenyliodonium trifluoromethanesulfonate, bis(p-tert-butylphenyl)iodonium trifluoromethanesulfonate, triphenylsulfonium hexafluorophosphate, (4-methoxyphenyl)diphenylsulfonium trifluoromethanesulfonate, and (p-tert-butylphenyl)diphenylsulfonium trifluoromethanesulfonate; benzointosylates such as benzoin tosylate and α-methylbenzoin tosylate; and other diphenyliodonium salts, triphenylsulfonium salts, phenyldiazonium salts, and benzyl carbonates.

Other examples of the acid generating agent include bissulfonyldiazomethanes such as bis(p-toluenesulfonyl)diazomethane, methylsulfonyl-p-toluenesulfonyl diazomethane, 1-cyclohexylsulfonyl-1-(1,1-dimethylethylsulfonyl)diazomethane, bis(1,1-dimethylethylsulfonyl)diazomethane, bis(1-methylethylsulfonyl)diazomethane, bis(cyclohexylsulfonyl)diazomethane, bis(2,4-dimethylphenylsulfonyl)diazomethane, bis(4-ethylphenylsulfonyl)diazomethane, bis(3-methylphenylsulfonyl)diazomethane, bis(4-methoxyphenylsulfonyl)diazomethane, bis(4-fluorophenylsulfonyl)diazomethane, bis(4-chlorophenylsulfonyl)diazomethane, and bis(4-tert-butylphenylsulfonyl)diazomethane; sulfonyl carbonyl alkanes such as 2-methyl-2-(p-toluenesulfonyl)propiophenone, 2-(cyclohexylcarbonyl)-2-(p-toluenesulfonyl)propane, 2-methanesulfonyl-2-methyl-(p-methylthio)propiophenone, and 2,4-dimethyl-2-(p-toluenesulfonyl)pentane-3-one; sulfonylcarbonyl diazomethanes such as 1-p-toluenesulfonyl-1-cyclohexylcarbonyl diazomethane, 1-diazo-1-methylsulfonyl-4-phenyl-2-butanone, 1-cyclohexylsulfonyl-1-cyclohexylcarbonyl diazomethane, 1-diazo-1-cyclohexylsulfonyl-3,3-dimethyl-2-butanone, 1-diazo-1-(1,1-dimethylethylsulfonyl)-3,3-dimethyl-2-butanone, 1-acetyl-1-(1-methylethylsulfonyl)diazomethane, 1-diazo-1-(p-toluenesulfonyl)-3,3-dimethyl-2-butanone, 1-diazo-1-benzenesulfonyl-3,3-dimethyl-2-butanone, 1-diazo-1-(p-toluenesulfonyl)-3-methyl-2-butanone, cyclohexyl 2-diazo-2-(p-toluenesulfonyl) acetate, tert-butyl 2-diazo-2-benzenesulfonylacetate, isopropyl 2-diazo-2-methanesulfonylacetate, cyclohexyl 2-diazo-2-benzenesulfonylacetate, and tert-butyl 2-diazo-2-(p-toluenesulfonyl) acetate; nitrobenzyl derivatives such as 2-nitrobenzyl p-toluene sulfonate, 2,6-dinitrobenzyl p-toluenesulfonate, and 2,4-dinitrobenzyl p-trifluoromethylbenzenesulfonate; and esters of a polyhydroxy compound and an aliphatic or aromatic sulfonic acid, such as methane sulfonate ester of pyrogallol, benzene sulfonate ester of pyrogallol, p-toluene sulfonate ester of pyrogallol, p-methoxybenzene sulfonate ester of pyrogallol, mesitylene sulfonate ester of pyrogallol, benzyl sulfonate ester of pyrogallol, methane sulfonate ester of alkyl gallate, benzene sulfonate ester of alkyl gallate, p-toluene sulfonate ester of alkyl gallate, p-methoxybenzene sulfonate ester of alkyl gallate (alkyl group having 1 or more and 15 or less carbon atoms), mesitylene sulfonate ester of alkyl gallate, and benzyl sulfonate ester of alkyl gallate. The acid generating agents may be used alone or in combination of two or more thereof.

A content of the acid generating agent (C) is preferably 0.1% by mass or more, more preferably 1% by mass or more, and still more preferably 3% by mass or more with respect to 100% by mass (total solid content) of the mass of the primer composition excluding the mass of the solvent (S) described below. The content is preferably 15% by mass or less, more preferably 10% by mass or less, and still more preferably 8% by mass or less. Within the above numerical range, good adhesion is easily obtained.

The content of the acid generating agent (C) is preferably 1 part by mass or more, more preferably 5 parts by mass or more, and still more preferably 8 parts by mass or more with respect to 100 parts by mass of the base material component (A). The content is preferably 50 parts by mass or less, more preferably 30 parts by mass or less, and still more preferably 20 parts by mass or less. Within the above numerical range, good adhesion is easily obtained.

### <Solvent (S)>

A type of the solvent (S) is not particularly limited, and is typically an organic solvent. A type of the organic solvent is not particularly limited as long as the components contained in the primer composition can be uniformly dissolved or dispersed.

Examples of the organic solvent include (poly)alkylene glycol monoalkyl ethers such as ethylene glycol monomethyl ether, ethylene glycol monoethyl ether, ethylene glycol-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate, and propylene glycol monoethyl ether acetate; other ethers such as diethylene glycol dimethyl ether, diethylene glycol methyl ethyl ether, diethylene glycol diethyl ether, and tetrahydrofuran; ketones such as methylethylketone, cyclohexanone, 2-heptanone, and 3-heptanone; lactic acid alkyl esters such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethyl ethoxyacetate, ethyl hydroxyacetate, methyl 2-hydroxy-3-methylbutanoate, 3-methoxybutyl acetate, 3-methyl-3-methoxybutyl acetate, 3-methyl-3-methoxybutyl propionate, ethyl acetate, n-propyl acetate, isopropyl acetate, n-butyl acetate, isobutyl acetate, n-pentyl formate, isopentyl acetate, n-butyl propionate, ethyl butyrate, n-propyl butyrate, isopropyl butyrate, n-butyl butyrate, methyl pyruvate, ethyl pyruvate, n-propyl pyruvate, methyl acetoacetate, ethyl acetoacetate, and ethyl 2-oxobutanate; aromatic hydrocarbons such as toluene and xylene; amides such as N-methylpyrrolidone, N,N-dimethylformamide, and N,N-dimethylacetamide; and alcohols such as ethanol, isopropyl alcohol, and butanol. These may be used alone or in combination of two or more thereof.

A content of the solvent (S) is not particularly limited. From the viewpoint of film formability, when the mass of the primer composition excluding the mass of the solvent (E) is defined as the solid content, the solvent is used so that a solid content concentration is preferably 0.1% by mass or more and 99% by mass or less, and more preferably 0.1% by mass or more and 50% by mass or less.

### <Other Components>

The primer composition may contain various additives in addition to the components described above. Preferable examples of the additive include a dispersing agent, an adhesion promoting agent such as a silane coupling agent, an antioxidant, an aggregation inhibiting agent, and an antifoaming agent.

### <Application>

The primer composition is used when forming, above a substrate, a cured product layer formed of a cured product of a photosensitive composition so that the primer layer exists between the substrate and the cured product layer. The photosensitive composition contains a photocurable compound (a) having an ethylenic unsaturated double bond-containing group and a photopolymerization initiating agent (b).

Examples of the ethylenic unsaturated double bond-containing group in the photocurable compound (a) include a vinyl group and a (meth)acryloyl group.

The photocurable compound (a) having an ethylenic unsaturated double bond-containing group is preferably a compound having a (meth)acryloyl group such as a (meth)acrylate compound or a (meth)acrylamide compound, and more preferably a (meth)acrylate compound. The photocurable compound (a) having an ethylenic unsaturated double bond-containing group includes a monofunctional compound and a polyfunctional compound.

Examples of the monofunctional compound include (meth)acrylamide, methylol (meth)acrylamide, methoxymethyl (meth)acrylamide, ethoxymethyl (meth)acrylamide, propoxymethyl (meth)acrylamide, butoxymethoxymethyl (meth)acrylamide, N-methylol (meth)acrylamide, N-hydroxymethyl (meth)acrylamide, (meth)acrylic acid, fumaric acid, maleic acid, maleic anhydride, itaconic acid, itaconic anhydride, citraconic acid, citraconic anhydride, crotonic acid, 2-acrylamide-2-methylpropane sulfonic acid, tert-butyl acrylamide sulfonic acid, methyl (meth)acrylate, ethyl (meth)acrylate, butyl (meth)acrylate, 2-ethylhexyl (meth)acrylate, cyclohexyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-(meth)acryloyloxy-2-hydroxypropyl phthalate, glycerin mono (meth)acrylate, tetrahydrofurfuryl (meth)acrylate, dimethylamino (meth)acrylate, glycidyl (meth)acrylate, 2,2,2-trifluoroethyl (meth)acrylate, 2,2,3,3-tetrafluoropropyl (meth)acrylate, and half (meth)acrylate of phthalic acid derivatives. These monofunctional compounds may be used alone or in combination of two or more thereof.

Examples of the polyfunctional compound include polyfunctional compounds such as ethylene glycol di(meth)acrylate, diethylene glycol di(meth)acrylate, tetraethylene glycol di(meth)acrylate, propylene glycol di(meth)acrylate, polypropylene glycol di(meth)acrylate, butylene glycol di(meth)acrylate, neopentyl glycol di(meth)acrylate, 1,6-hexane glycol di(meth)acrylate, trimethylolpropane tri(meth)acrylate, glycerin di(meth)acrylate, pentaerythritol triacrylate, pentaerythritol tetraacrylate, dipentaerythritol pentaacrylate, dipentaerythritol hexaacrylate, pentaerythritol di(meth)acrylate, pentaerythritol tri(meth)acrylate, pentaerythritol tetra(meth)acrylate, dipentaerythritol penta(meth)acrylate, dipentaerythritol hexa(meth)acrylate, 2,2-bis(4-(meth)acryloxyethoxyphenyl)propane, 2,2-bis(4-(meth)acryloxypolyethoxyphenyl) propane, 2-hydroxy-3-(meth)acryloyloxypropyl(meth)acrylate, ethylene glycol diglycidyl ether di(meth)acrylate, diethylene glycol diglycidyl ether di(meth)acrylate, phthalic acid diglycidyl ester di(meth)acrylate, glycerin triacrylate, glycerin polyglycidyl ether poly(meth)acrylate, urethane (meth)acrylate (i.e., tolylene diisocyanate), a reaction product of trimethylhexamethylene diisocyanate, hexamethylene diisocyanate, and 2-hydroxyethyl (meth)acrylate, methylene bis(meth)acrylamide, (meth)acrylamide methylene ether, and a condensate of a polyvalent alcohol and N-methylol (meth)acrylamide; and triacrylformal. These polyfunctional compounds may be used alone or in combination of two or more thereof.

Examples of the photopolymerization initiating agent (b) include the same compounds as those of the acid generating agent (D) in the primer composition.

The photosensitive composition may contain the solvent (S1). Examples of the solvent (S1) include the same compounds as those of the solvent (S) in the primer composition.

The SP value of the solvent (S1) is not particularly limited, and is, for example, 7 or more and 11 or less.

### <<Laminate>>

A laminate includes a substrate, a primer layer derived from the primer composition, and a cured product layer formed of a cured product of the photosensitive composition.

### <Substrate>

Examples of the substrate include substrates (for example, various inorganic substrates and organic substrates) used for fabricating a semiconductor device. Examples of a material of the inorganic substrate include various metals such as copper, aluminum, iron, and tungsten, alloys thereof, silicon, and glass. Examples of a material of the organic substrate include various resin materials such as polyester resins such as PET resin and PBT resin, various types of nylon, polyimide resins, polyamide imide resins, polyolefins such as polyethylene and polypropylene, polystyrene, (meth)acrylic resins, and polycarbonate resins. Among them, a substrate made of silicon, a polycarbonate resin, or glass is preferable.

A thickness of the primer layer is, for example, 5 nm or more and 50 nm or less. A thickness of the cured product layer is, for example, 10 nm or more and 200 µm or less.

### <Method for Producing Laminate>

Examples of the method for producing a laminate include a method including applying a primer composition onto a substrate and drying the primer composition to form a primer layer (hereinafter also referred to as "primer layer forming step"), applying a photosensitive composition onto the substrate having the primer layer formed thereon to form a photosensitive composition layer (hereinafter also referred to as "photosensitive composition layer forming step"), and exposing the photosensitive composition layer to form a cured product layer (hereinafter also referred to as "cured product layer forming step"). In the method, when a component other than the compound (B) in the primer composition is polymerizable or crosslinkable, the component other than the compound (B) in the primer composition is polymerized or crosslinked before application of the photosensitive composition.

### [Primer Layer Forming Step]

The method of applying the primer composition is not particularly limited. For example, a contact transfer type coating device such as a roll coater, a reverse coater, a bar coater, or a slit coater, or a non-contact type coating device such as a spinner (rotary coating device) or a curtain flow coater can be used to coat the primer composition on the substrate so as to implement a desired film thickness to form a coating film. The coating film can also be formed by methods such as dip coating, and various printing methods such as inkjet printing and gravure printing.

A method of drying the coating film is not particularly limited, and methods known in the related art such as natural drying and heat drying can be adopted.

When the component other than the compound (B) in the primer composition can be polymerized or crosslinked, the component other than the compound (B) in the primer composition is polymerized or crosslinked. The method is not particularly limited, and when the component other than the compound (B) is photocurable, the primer layer can be obtained as a cured product by exposing the coating film, and when the component is thermosetting, the primer layer can be obtained by heating the coating film. Conditions for exposing the coating film are not particularly limited as long as curing favorably proceeds. The exposure is performed, for example, by irradiation with an active energy ray such as an ultraviolet ray or excimer laser light. An irradiation energy dose is not particularly limited, and is, for example, 30 mJ/cm² or more and 5,000 mJ/cm² or less.

### [Photosensitive Composition Layer Forming Step]

A method of coating the photosensitive composition to form the photosensitive composition layer is not particularly limited, and examples thereof include the same methods as the method of coating the primer composition and the method of drying the coating film.

### [Cured Product Layer Forming Step]

A method of exposing the photosensitive composition layer is not particularly limited. Conditions for exposure are not particularly limited as long as curing favorably proceeds. The exposure is performed, for example, by irradiation with an active energy ray such as an ultraviolet ray or excimer laser light. An irradiation energy dose is not particularly limited, and is, for example, 30 mJ/cm² or more and 5,000 mJ/cm² or less.

The cured product layer to be formed may be patterned as necessary. A patterning method is not particularly limited, and examples thereof include a method of regioselectively exposing the photosensitive composition layer (photolithography), and a method including pressing a mold having a concave-convex pattern against the photosensitive composition layer to transfer the concave-convex pattern to the photosensitive composition layer, exposing the photosensitive composition layer to which the concave-convex pattern is transferred while pressing the mold against the photosensitive composition layer to form a cured product layer, and peeling the mold from the cured product layer (photo-nanoimprint lithography). The primer composition can improve the adhesion between the substrate and the cured product layer formed of the cured product of the photosensitive composition regardless of the type of the substrate, and is particularly useful for photo-nanoimprint lithography in which the cured product layer is easily peeled off when the mold is peeled off from the cured product layer.

As described above, the present inventor provides the following aspects (1) to (10).
(1) A primer composition used for forming a primer layer between a substrate and a cured product layer comprising a cured product of a photosensitive composition, when forming
   the cured product layer above the substrate,
   the photosensitive composition containing a photocurable compound (a) having an ethylenic unsaturated double bond-containing group, and a photopolymerization initiating agent (b),
   the primer composition containing a base material component (A), a compound (B), and a solvent (S),
   the base material component (A) being a compound not forming a covalent bond by a reaction with the ethylenic unsaturated double bond-containing group in the photocurable compound (a),
   the base material component (A) containing a resin (A1) and/or a polymerizable compound (A2),
   the polymerizable compound (A2) being a compound polymerizable by a polymerization mechanism other than radical polymerization,
   the compound (B) having a functional group capable of forming a covalent bond by a reaction with the ethylenic unsaturated double bond-containing group in the photocurable compound (a),
   the functional group in the compound (B) being at least one selected from the group consisting of an ethylenic unsaturated double bond-containing group, an amino group, a hydrosilyl group, and a thiol group.
(2) The primer composition as described in aspect (1), in which an ethylenic unsaturated double bond-containing group in the compound (B) is a vinyl group or a (meth)acryloyl group, and
   the ethylenic unsaturated double bond-containing group in the photocurable compound (a) is a vinyl group or a (meth)acryloyl group.
(3) The primer composition as described in aspect (1) or (2), in which the base material component (A) contains a water-soluble resin (A1-1) as the resin (A1).
(4) The primer composition as described in aspect (3), in which the base material component (A) contains, as the water-soluble resin (A1-1), at least one selected from the group consisting of a polyvinyl alcohol, polyvinylpyrrolidone, a polysaccharide, and a poly(meth)acrylic acid.
(5) The primer composition as described in any one of aspects (1) to (4), in which the base material component (A) contains a cyclic ether group-containing compound (A2-1) as the polymerizable compound (A2).
(6) The primer composition as described in aspect (5), further containing: an acid generating agent (D).
(7) The primer composition as described in any one of aspects (1) to (6), containing: a phenolic hydroxy group-containing resin (A1-2) as the resin (A1); a cyclic ether group-containing compound (A2-1) as the polymerizable compound (A2); and/or a methylol-type crosslinking agent (C); and an acid generating agent (D).
(8) A laminate including: a substrate; the primer layer derived from the primer composition as described in any one of aspects (1) to (7); and the cured product layer.
(9) A method for producing the laminate as described in aspect (8), including: applying the primer composition as described in any one of aspects (1) to (7) onto a substrate and drying the primer composition to form a primer layer;
   applying the photosensitive composition onto the substrate having the primer layer formed thereon to form a photosensitive composition layer; and
   exposing the photosensitive composition layer to form the cured product layer,
   in which, when a component other than the compound (B) in the primer composition is polymerizable or crosslinkable, the component other than the compound (B) in the primer composition is polymerized or crosslinked before application of the photosensitive composition.

### EXAMPLES

Although the present invention will be described in more detail with reference to Examples, the present invention is not limited to Examples.

Hereinafter, various chemicals used in Examples and Comparative Examples will be collectively described.

### <Primer Composition>

A-1: PVA-505C (polyvinyl alcohol, SP value: 19.01) manufactured by KURARAY CO., LTD.
A-2: jER1007 (bisphenol A-type epoxy resin) manufactured by Mitsubishi Chemical Corporation
A-3: PVP K 15 (polyvinyl pyrolidone) manufactured by Tokyo Chemical Industry Co., Ltd.
A-4: PAA (polyacrylic acid) manufactured by Sigma-Aldrich Corporation
A-5: M-313 (isocyanuric acid EO-modified di and triacrylate) manufactured by Toagosei Co., Ltd.
A-6: jER157S70 (bisphenol A novolac type epoxy resin) manufactured by Mitsubishi Chemical Corporation
A-7: VP-2500 (poly(p-hydroxystyrene), Mw: 2,400) manufactured by Nippon Soda Co., Ltd.
B-1: KAYARAD DPHA (mixture of dipentaerythritol hexaacrylate and dipentaerythritol pentaacrylate) manufactured by Nippon Kayaku Co., Ltd.
B-2: Polyethyleneimine 10000 (polyethyleneimine) manufactured by JUNSEI CHEMICAL CO., LTD.
C-1: NIKALAC MW-100LM (methylol-type crosslinking agent represented by the following formula) manufactured by Sanwa Chemical Co., Ltd. 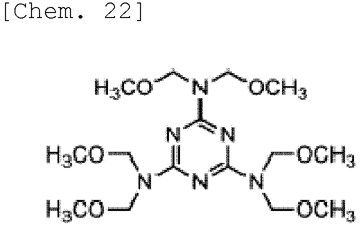
D-1: Irgacure 290 (photoacid generating agent represented by the following formula) manufactured by BASF 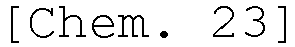 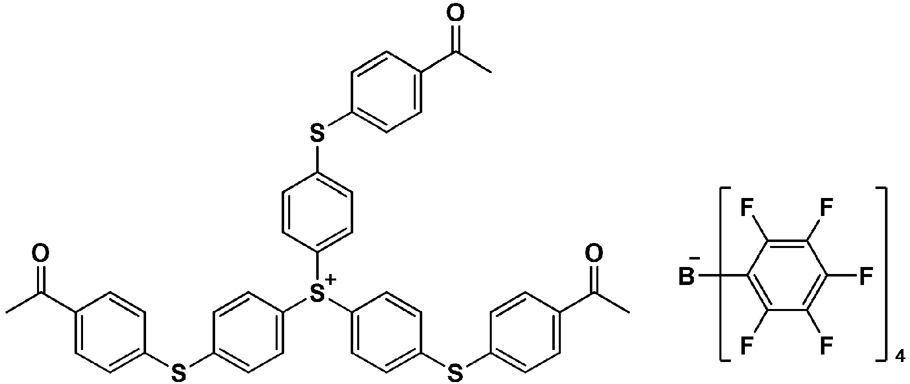
D-2: Irgacure PAG103 (photoacid generating agent represented by the following formula) manufactured by BASF 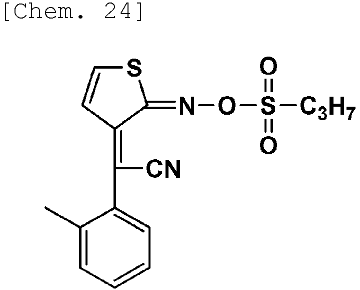
E-1: KBM-503 (3-methacryloxypropyltrimethoxysilane) manufactured by Shin-Etsu Chemical Co., Ltd.
PE: Propylene glycol monomethyl ether
PM: Propylene glycol monomethyl ether acetate

### <Photosensitive Composition>

F-1: A-DCP (tricyclodecane dimethanol diacrylate) manufactured by Shin-Nakamura Chemical Co., Ltd.
G-1: KBM-503 (3-methacryloxypropyltrimethoxysilane) manufactured by Shin-Etsu Chemical Co., Ltd.
G-2: PF-656 (fluorine-based surfactant represented by the following formula) manufactured by OMNOVA Solutions Inc.

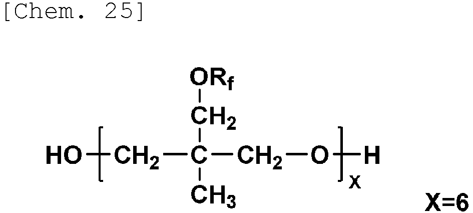

   **R_{f}≡CH₂CF₃, CH₂CF₂CF₃**
H-1: Omnirad 651 (2,2-dimethoxy-2-phenylacetophenone, photoacid generating agent) manufactured by IGM Resins PM: Propylene glycol monomethyl ether acetate (SP value: 8.73)

### <Substrate>

S-1: Made of silicon
S-2: Made of polycarbonate
S-3: Made of glass (EAGLE XG manufactured by Corning Incorporated)

### <Examples and Comparative Examples>

Components of types and amounts (part by mass) shown in Table 1 were mixed with solvents shown in Table 1 (in the case of mixed solvents, mass ratios are also shown) so as to implement solid content concentrations (concentrations of components other than solvent) (% by mass) shown in Table 1, thereby obtaining primer compositions of Examples and Comparative Examples. The obtained primer composition was coated on a substrate shown in Table 1 using a spin coater (MS-B200 manufactured by Mikasa Co., Ltd.), and the coating film was heated at 100°C for 1 minute to form a primer layer. In Examples 4 and 5, after being heated at 100°C for 1 minute, the coating film was exposed using an exposure apparatus (HMW-532D manufactured by ORC MANUFACTURING CO., LTD., ultra-high pressure mercury lamp) at an exposure amount of 1 J/cm², and further heated at 100°C for 1 minute to form a primer layer. A film thickness of the formed primer layer was measured by spectroscopic ellipsometry. Results are shown in Table 1. Examples 2 and 3 were not silicon substrates, and thus although the film thickness was not measured by spectroscopic ellipsometry, the film thicknesses of Examples 2 and 3 were evaluated to be the same as that of Example 1 because the primer composition and the coating method used were the same as those of Example 1.

A photosensitive composition was obtained by mixing 100 parts by mass of F-1, 5 parts by mass of G-1, 0.25 parts by mass of G-2, and 5 parts by mass of H-1 with PM so that a solid content concentration (concentration of components other than solvent) was 20% by mass. The photosensitive composition was coated on the substrate having the primer layer formed thereon using a spin coater (MS-B200 manufactured by Mikasa Co., Ltd.), and the coating film was heated at 100°C for 1 minute. Thereafter, exposure was performed using an imprinting apparatus (ST-200 manufactured by Shibaura Machine Co., Ltd.) at an exposure amount of 1 J/cm² (in vacuum atmosphere of 200 Pa) to form a cured product layer.

### <Adhesion>

A lattice incision (cross-cut) having a width of 1 mm was placed in the cured product layer on the substrate. A tape peeling test defined in ASTM-D3359-09e2 was performed on the laminate obtained by placing the incision in the cured product layer to observe presence or absence of peeling of each lattice. Results of the tape peeling test were evaluated according to the following criteria. The results are shown in Table 1. A (Rank 5B): No peeling occurred. B (Rank 4B): The ratio of the number of peeled cured product layers to the total number of cured product layers divided by the lattice incision was 5% or less. C (Rank 3B): The ratio of the number of peeled cured product layers to the total number of cured product layers divided by the lattice incision was more than 5% and 15% or less. D (Ranks 2B to 0B): The ratio of the number of peeled cured product layers to the total number of resin films divided by the lattice incision was 15% or more.

**[Table 1]**

| | Example | | | | | Comparative example | | | | |
|---|---|---|---|---|---|---|---|---|---|---|
| | 1 | 2 | 3 | 4 | 5 | 1 | 2 | 3 | 4 | 5 |
| A-1 | 50 | 50 | 50 | | | | | | | |
| A-2 | | | | 50 | | | | | | |
| A-3 | | | | | | | 100 | | | |
| A-4 | | | | | | | | 100 | | |
| A-5 | | | | | | | | | 100 | |
| A-6 | | | | | | | | | | 100 |
| A-7 | | | | | 42 | | | | | |
| B-1 | | | | 50 | 50 | | | | | |
| B-2 | 50 | 50 | 50 | | | | | | | |
| C-1 | | | | | 8 | | | | | |
| D-1 | | | | 5 | | | | | | |
| D-2 | | | | | 5 | | | | | |
| E-1 | | | | | | 100 | | | | |
| Solvent (Mass ratio) | PE/water (80/20) | PE/water (80/20) | PE/water (80/20) | PM | PM | PM | PE | PE | PM | PM |
| Solid content concentration (Mass%) | 0.25 | 0.25 | 0.25 | 0.5 | 0.5 | 1 | 0.5 | 0.5 | 0.5 | 0.5 |
| Film thickness (nm) | 19 | 19 | 19 | 11 | 10 | 18 | 20 | 20 | 19 | 19 |
| Substrate | S-1 | S-2 | S-3 | S-1 | S-1 | S-1 | S-1 | S-1 | S-1 | S-1 |
| Adhesion | A | A | A | A | C | D | D | D | D | D |

As shown in Table 1, it is found that when the primer compositions of Examples are used, the adhesion of the cured product layer is good, whereas when the primer compositions of Comparative Examples are used, the adhesion of the cured product layer is poor. In particular, it is found from the results of Examples 1 to 3 that the adhesion of the cured product layer is good regardless of the type of the substrate.

## Claims

1. A primer composition for use in forming a primer layer between a substrate and a cured product layer comprising a cured product of a photosensitive composition, when forming the cured product layer above the substrate,
the photosensitive composition comprising a photocurable compound (a) having an ethylenic unsaturated double bond-containing group, and a photopolymerization initiating agent (b),
the primer composition comprising a base material component (A), a compound (B), and a solvent (S),
the base material component (A) being a compound not forming a covalent bond by a reaction with the ethylenic unsaturated double bond-containing group in the photocurable compound (a),
the base material component (A) comprising a resin (A1) and/or a polymerizable compound (A2),
the polymerizable compound (A2) being a compound polymerizable by a polymerization mechanism other than radical polymerization,
the compound (B) having a functional group capable of forming a covalent bond by a reaction with the ethylenic unsaturated double bond-containing group in the photocurable compound (a),
the functional group in the compound (B) being at least one selected from the group consisting of an ethylenic unsaturated double bond-containing group, an amino group, a hydrosilyl group, and a thiol group.

2. The primer composition according to claim 1, wherein an ethylenic unsaturated double bond-containing group in the compound (B) is a vinyl group or a (meth)acryloyl group, and
the ethylenic unsaturated double bond-containing group in the photocurable compound (a) is a vinyl group or a (meth)acryloyl group.

3. The primer composition according to claim 1, wherein the base material component (A) comprises a water-soluble resin (A1-1) as the resin (A1).

4. The primer composition according to claim 3, wherein the base material component (A) comprises, as the water-soluble resin (A1-1), at least one selected from the group consisting of a polyvinyl alcohol, polyvinylpyrrolidone, a polysaccharide, and a poly(meth)acrylic acid.

5. The primer composition according to claim 1, wherein the base material component (A) comprises a cyclic ether group-containing compound (A2-1) as the polymerizable compound (A2).

6. The primer composition according to claim 5, further comprising: an acid generating agent (D).

7. The primer composition according to claim 1, comprising: a phenolic hydroxy group-containing resin (A1-2) as the resin (A1); a cyclic ether group-containing compound (A2-1) as the polymerizable compound (A2); and/or a methylol-type crosslinking agent (C); and an acid generating agent (D).

8. A laminate comprising: a substrate; the primer layer derived from the primer composition according to any one of claims 1 to 7; and the cured product layer.

9. A method for producing a laminate comprising: a substrate; the primer layer derived from the primer composition according to any one of claims 1 to 7; and the cured product layer,
the method, comprising: applying the primer composition according to any one of claims 1 to 7 onto a substrate and drying the primer composition to form a primer layer;
applying the photosensitive composition onto the substrate having the primer layer formed thereon to form a photosensitive composition layer; and
exposing the photosensitive composition layer to form the cured product layer,
wherein, when a component other than the compound (B) in the primer composition is polymerizable or crosslinkable, the component other than the compound (B) in the primer composition is polymerized or crosslinked before application of the photosensitive composition.

10. Use of a primer composition in forming a primer layer between a substrate and a cured product layer comprising a cured product of a photosensitive composition, when forming the cured product layer above the substrate,
the photosensitive composition comprising a photocurable compound (a) having an ethylenic unsaturated double bond-containing group, and a photopolymerization initiating agent (b),
the primer composition comprising a base material component (A), a compound (B), and a solvent (S),
the base material component (A) being a compound not forming a covalent bond by a reaction with the ethylenic unsaturated double bond-containing group in the photocurable compound (a),
the base material component (A) comprising a resin (A1) and/or a polymerizable compound (A2),
the polymerizable compound (A2) being a compound polymerizable by a polymerization mechanism other than radical polymerization,
the compound (B) having a functional group capable of forming a covalent bond by a reaction with the ethylenic unsaturated double bond-containing group in the photocurable compound (a),
the functional group in the compound (B) being at least one selected from the group consisting of an ethylenic unsaturated double bond-containing group, an amino group, a hydrosilyl group, and a thiol group.

11. The use according to claim 10, wherein an ethylenic unsaturated double bond-containing group in the compound (B) is a vinyl group or a (meth)acryloyl group, and
the ethylenic unsaturated double bond-containing group in the photocurable compound (a) is a vinyl group or a (meth)acryloyl group.

12. The use according to claim 10, wherein the base material component (A) comprises a water-soluble resin (A1-1) as the resin (A1).

13. The use according to claim 12, wherein the base material 5component (A) comprises, as the water-soluble resin (A1-1), at least one selected from the group consisting of a polyvinyl alcohol, polyvinylpyrrolidone, a polysaccharide, and a poly(meth)acrylic acid.

14. The use according to claim 10, wherein the base material component (A) comprises a cyclic ether group-containing compound (A2-1) as the polymerizable compound (A2).

15. The use according to claim 14, wherein the primer composition further comprises an acid generating agent (D).
